# EUROPEAN PATENT APPLICATION

(11) **EP 4 340 413 A1**
(43) Date of publication of application: **20.03.2024**
(21) Application number: 21941319.2
(22) Date of filing: 12.05.2021
(51) Int. Cl.: H04W 8/00

(54) **CAPABILITY INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Kudlek, Franz Thomas
(86) International application number: PCT/CN2021/093425
(87) International publication number: WO 2022/236746

(57) **Abstract**

An embodiment of the present disclosure provides a capability information transmission method, wherein the method is implemented by a first base station. The method comprises: sending first capability information for wireless charging to a core network device, the first capability information being at least used to indicate whether the first base station supports wireless charging capabilities.

## Description

### TECHNICAL FIELD

The disclosure relates to, but is not limited to, a field of wireless communication technologies, in particular to a method for transmitting capability information, an apparatus for transmitting capability information, a communication device and a storage medium.

### BACKGROUND

Wireless charging technologies are mainly divided into three major categories, namely the electromagnetic induction technology, the electromagnetic resonance technology and the radio frequency technology. A technology of charging over the air uses a spatial electric field as a medium to transfer energy and belongs to the radio frequency technology. The technology of charging over the air can use a large number of antennas to transfer energy to a terminal in a form of an extremely narrow beam of millimeter waves, and the terminal receives the energy through a micro-beacon antenna, thereby achieving long-distance wireless charging.

In the related art, with the development of the cellular mobile communication technology, especially the development of millimeter wave communication technology, a base station can be equipped with more and more antennas, such as, the large-scale multiple-input multiple-output antenna technology. Therefore, how to realize wireless charging through a cellular network is a problem that needs to be solved.

### SUMMARY

Embodiments of the disclosure provide a method for transmitting capability information, an apparatus for transmitting capability information, a communication device and a storage medium.

According to a first aspect of embodiments of the disclosure, a method for transmitting capability information, executed by a first base station, is provided. The method includes:
sending first capability information for wireless charging to a core network device;
in which, the first capability information is at least configured to indicate whether the first base station supports a wireless charging capability.

According to a second aspect of embodiments of the disclosure, a method for transmitting capability information, executed by a first base station, is provided. The method includes:
receiving second capability information for wireless charging sent by a core network device;
in which, the second capability information is at least configured to indicate whether the core network device supports a wireless charging capability.

According to a third aspect of embodiments of the disclosure, a method for transmitting capability information, executed by a core network device, is provided. The method includes:
sending second capability information for wireless charging to a first base station;
in which, the second capability information is at least configured to indicate whether the core network device supports a wireless charging capability.

According to a fourth aspect of embodiments of the disclosure, a method for transmitting capability information, executed by a core network device, is provided. The method includes:
receiving first capability information for wireless charging sent by a first base station;
in which, the first capability information is at least configured to indicate whether the first base station supports a wireless charging capability.

According to a fifth aspect of embodiments of the disclosure, an apparatus for transmitting capability information, applied to a first base station, is provided. The apparatus includes:
a first sending module, configured to send first capability information for wireless charging to a core network device;
in which, the first capability information is at least configured to indicate whether the first base station supports a wireless charging capability.

According to a sixth aspect of embodiments of the disclosure, an apparatus for transmitting capability information, applied to a first base station, is provided. The apparatus includes:
a first receiving module, configured to receive second capability information for wireless charging sent by a core network device;
in which, the second capability information is at least configured to indicate whether the core network device supports a wireless charging capability.

According to a seventh aspect of embodiments of the disclosure, an apparatus for transmitting capability information, applied to a core network device, is provided. The apparatus includes:
a second sending module, configured to send second capability information for wireless charging to a first base station;
in which, the second capability information is at least configured to indicate whether the core network device supports a wireless charging capability.

According to an eighth aspect of embodiments of the disclosure, an apparatus for transmitting capability information, applied to a core network device, is provided. The apparatus includes:
a second receiving module, configured to receive first capability information for wireless charging sent by a first base station;
in which, the first capability information is at least configured to indicate whether the first base station supports a wireless charging capability.

According to a ninth aspect of embodiments of the disclosure, a communication device is provided. The communication device includes:
a processor; and
a memory for storing instructions executable by the processor;
in which, the processor is configured to, when executing the executable instructions, implement the method of any embodiment of the disclosure.

According to a tenth aspect of embodiments of the disclosure, a computer storage medium is provided. The computer storage medium has a computer executable program stored thereon. When the executable program is executed by a processor, the method of any embodiment of the disclosure is performed.

In the embodiments of the disclosure, the first base station sends the first capability information for wireless charging to the core network device, in which the first capability information is at least configured to indicate whether the first base station supports the wireless charging capability. In this way, the core network device can receive the first capability information and determine whether the first base station supports wireless charging based on the first capability information, so that an operation for charging configuration of the first base station can be performed according to whether the first base station supports the wireless charging. In the embodiments of the disclosure, the core network device sends the second capability information for wireless charging to the first base station, in which the second capability information is at least configured to indicate whether the core network device supports the wireless charging capability. In this way, the first base station can receive the second capability information and determine whether the core network device supports the wireless charging based on the second capability information, so that an operation for charging configuration of the core network device can be performed according to whether the core network device supports the wireless charging.

### BRIEF DESCRIPTION OF THE DRAWINGS

FIG. 1 is a schematic diagram of a wireless communication system according to an exemplary embodiment.
FIG. 2 is a flowchart of a method for transmitting capability information according to an exemplary embodiment.
FIG. 3 is a flowchart of a method for transmitting capability information according to an exemplary embodiment.
FIG. 4 is a flowchart of a method for transmitting capability information according to an exemplary embodiment.
FIG. 5 is a flowchart of a method for transmitting capability information according to an exemplary embodiment.
FIG. 6 is a flowchart of a method for transmitting capability information according to an exemplary embodiment.
FIG. 7 is a flowchart of a method for transmitting capability information according to an exemplary embodiment.
FIG. 8 is a flowchart of a method for transmitting capability information according to an exemplary embodiment.
FIG. 9 is a flowchart of a method for transmitting capability information according to an exemplary embodiment.
FIG. 10 is a flowchart of a method for transmitting capability information according to an exemplary embodiment.
FIG. 11 is a flowchart of a method for transmitting capability information according to an exemplary embodiment.
FIG. 12 is a flowchart of a method for transmitting capability information according to an exemplary embodiment.
FIG. 13 is a flowchart of a method for transmitting capability information according to an exemplary embodiment.
FIG. 14 is a flowchart of a method for transmitting capability information according to an exemplary embodiment.
FIG. 15 is a flowchart of a method for transmitting capability information according to an exemplary embodiment.
FIG. 16 is a flowchart of a method for transmitting capability information according to an exemplary embodiment.
FIG. 17 is a flowchart of a method for transmitting capability information according to an exemplary embodiment.
FIG. 18 is a flowchart of a method for transmitting capability information according to an exemplary embodiment.
FIG. 19 is a flowchart of a method for transmitting capability information according to an exemplary embodiment.
FIG. 20 is a flowchart of a method for transmitting capability information according to an exemplary embodiment.
FIG. 21 is a flowchart of a method for transmitting capability information according to an exemplary embodiment.
FIG. 22 is a flowchart of a method for transmitting capability information according to an exemplary embodiment.
FIG. 23 is a flowchart of a method for transmitting capability information according to an exemplary embodiment.
FIG. 24 is a flowchart of a method for transmitting capability information according to an exemplary embodiment.
FIG. 25 is a flowchart of a method for transmitting capability information according to an exemplary embodiment.
FIG. 26 is a flowchart of a method for transmitting capability information according to an exemplary embodiment.
FIG. 27 is a flowchart of a method for transmitting capability information according to an exemplary embodiment.
FIG. 28 is a flowchart of a method for transmitting capability information according to an exemplary embodiment.
FIG. 29 is a flowchart of a method for transmitting capability information according to an exemplary embodiment.
FIG. 30 is a flowchart of a method for transmitting capability information according to an exemplary embodiment.
FIG. 31 is a flowchart of a method for transmitting capability information according to an exemplary embodiment.
FIG. 32 is a flowchart of a method for transmitting capability information according to an exemplary embodiment.
FIG. 33 is a flowchart of a method for transmitting capability information according to an exemplary embodiment.
FIG. 34 is a flowchart of a method for transmitting capability information according to an exemplary embodiment.
FIG. 35 is a flowchart of a method for transmitting capability information according to an exemplary embodiment.
FIG. 36 is a flowchart of a method for transmitting capability information according to an exemplary embodiment.
FIG. 37 is a flowchart of a method for transmitting capability information according to an exemplary embodiment.
FIG. 38 is a block diagram of an apparatus for transmitting capability information according to an exemplary embodiment.
FIG. 39 is a block diagram of an apparatus for transmitting capability information according to an exemplary embodiment.
FIG. 40 is a block diagram of an apparatus for transmitting capability information according to an exemplary embodiment.
FIG. 41 is a block diagram of an apparatus for transmitting capability information according to an exemplary embodiment.
FIG. 42 is a block diagram of a terminal according to an exemplary embodiment.
FIG. 43 is a block diagram of a base station according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with some aspects related to the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, but the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

For the purposes of brevity and ease of understanding, the terms "greater than" or "less than" are used herein to represent size relationships. However, it is understood by those skilled in the art that the term "greater than" also covers the meaning of "greater than or equal to", and "less than" also covers the meaning of "less than or equal to".

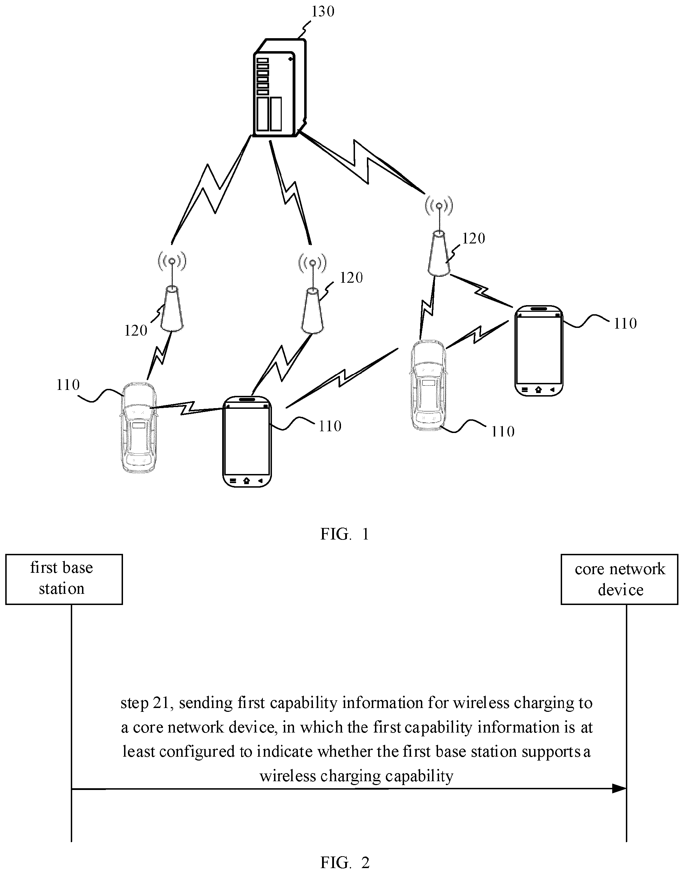

FIG. 1 is a schematic diagram illustrating a wireless communication system provided by an embodiment of the disclosure. As illustrated in FIG. 1, the wireless communication system is a communication system based on mobile communication technologies. The wireless communication system may include: a plurality of user equipment (UEs) 110 and a plurality of base stations 120.

The UE 110 may be a device that provides voice and/or data connectivity to a user. The UE 110 may communicate with one or more core networks via a Radio Access Network (RAN). The UE 110 may be an Internet of Things (IoT) UE, such as a sensor device, a cell phone, and a computer with an IoT UE. For example, the UE 110 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 110 may be an unmanned aerial vehicle device. Or, the UE 110 may be an in-vehicle device, such as, an electronic control unit (ECU) having a wireless communication function, or a wireless UE external to the ECU. Or, the UE 110 can also be a roadside device, for example, a street light, a signal light, or other roadside devices having the wireless communication function.

The base station 120 may be a network device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. An access network in the 5G system may be called a New Generation-RAN (NG-RAN).

The base station 120 can be an evolved base station (eNB) employed in the 4G system. Or, the base station 120 may be a base station (gNB) with a centralized distributed architecture employed in the 5G system. When the base station 120 adopts the centralized distributed architecture, it usually includes a Central Unit (CU) and at least two Distributed Units (DUs). The CU is equipped with a protocol stack of a Packet Data Convergence Protocol (PDCP) layer, a Radio Link Control (RLC) layer, or a Media Access Control (MAC) layer. The DU is equipped with a protocol stack of a physical (PHY) layer. The specific implementation of the base station 120 is not limited in the embodiment of the disclosure.

A wireless connection can be established between the base station 120 and the UE 110 via a radio interface. In different implementations, the radio interface is a radio interface based on the 4G standard. Or, the radio interface is a radio interface based on the 5G standard, such as an NR. Or, the radio interface may also be a radio interface based on a standard of the next generation of the 5G.

In some embodiments, an End to End (E2E) connection can also be established between the UEs 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The above UE may be considered to be the terminal device in the following embodiments.

In some embodiments, the above wireless communication system may also include a network management device 130.

The plurality of base stations 120 are connected to the network management device 130 respectively. The network management device 130 may be a core network device in the wireless communication system. For example, the network management device 130 may be a Mobility Management Entity (MME) in an Evolved Packet Core (EPC). Or, the network management device may be another core network devices, such as a Serving GateWay (SGW), a Public Data Network GateWay (PGW), a Policy and Charging Rules Function (PCRF), or a Home Subscriber Server (HSS), etc. The implementation form of the network management device 130 is not limited in the embodiments of the disclosure.

In order to facilitate understanding by those skilled in the art, the embodiments of the disclosure list a plurality of implementations to clearly illustrate the technical solutions of the embodiments of the disclosure. Certainly, it is understood by those skilled in the art that the embodiments of the disclosure may be executed alone, or may be executed in combination with methods of other embodiments of the disclosure, or may be executed alone or together with some methods in other related arts, which is not limited in the embodiments of the disclosure.

As illustrated in FIG. 2, the embodiment of the disclosure provides a method for transmitting capability information, which is executed by a first base station. The method includes the following steps.

At step 21, first capability information for wireless charging is sent to a core network device.

The first capability information is at least configured to indicate whether the first base station supports a wireless charging capability.

The first base station is an interface device for a terminal to access a network.

In some embodiments, the terminal may include, but is not limited to, a cell phone, a wearable device, an in-vehicle terminal, a Road Side Unit (RSU), a smart home terminal, an industrial sensing device, or a medical device, etc.

In some embodiments, the first base station may be any type of base station, such as, a third-generation (3G) base station, a fourth-generation (4G) base station, a fifth-generation (5G) base station, or other evolved base stations.

In some embodiments, the core network device may be an Access and Mobility Management Function (AMF) or a Mobility Management Entity (MME), etc. It should be noted that, when a wireless communication system is an NR system, the core network device may be the AMF, and when the wireless communication system is an evolved universal terrestrial radio access network (E-UTRAN) system, the core network device may be the MME.

Wireless charging may use a spatial electric field as a medium to transfer energy. The core network device may use a large number of antennas to transfer the energy to the first base station in a form of extremely narrow beams of millimeter wave, and the first base station receives the energy through a micro-beacon antenna, thereby realizing long-distance wireless charging.

The wireless charging may use the spatial electric field as the medium to transfer energy. The first base station may use a large number of antennas to transfer the energy to the core network device in the form of extremely narrow beams of millimeter wave, and the core network device receives the energy through a micro-beacon antenna, thereby realizing long-distance wireless charging.

In an embodiment, the first capability information includes one or more of the followings:
support information, configured to indicate whether a base station supports wireless charging or not;
power information, configured to indicate a power for wireless charging supported by the base station; and
time information, configured to indicate a duration for wireless charging supported by the base station.

In an embodiment, the support information is configured to indicate that the first base station supports the wireless charging. In another embodiment, the support information is configured to indicate that the first base station does not support the wireless charging.

In an embodiment, the power information is configured to indicate a maximum power and/or a rated power for wireless charging supported by the first base station.

In an embodiment, the time information is configured to indicate a duration for wireless charging supported by the first base station. For example, the time information is configured to indicate that the duration for wireless charging supported by the first base station is from 9:00 p.m. to 4:00 a.m. The duration may be represented by start time information and end time information, or represented by start time information and duration information. For example, the time information is that the start time is moment a, and the duration is b hours.

In an embodiment, in response to the first base station receiving a request message for obtaining the first capability information sent by the core network device, the first capability information for wireless charging is sent to the core network device.

In an embodiment, in response to a connection between the first base station and the core network device being established, the first capability information for wireless charging is sent to the core network device.

In an embodiment, in response to the first base station receiving the request message for obtaining the first capability information sent by the core network device, the first capability information for wireless charging and capacity information of a second base station connected to the first base station are sent to the core network device.

In an embodiment, in response to a connection between the first base station and the core network device being established, the first capability information for wireless charging and the capacity information of the second base station connected to the first base station are sent to the core network device.

In an embodiment, the first capability information may be sent to the core network device during a process of establishing an interface between the first base station and the core network device. It should be noted that, if a communication system is an NR system, the interface is a new generation (NG) interface, and if the communication system is an E-UTRAN system, the interface is an S1 interface.

In an embodiment, the first capability information for wireless charging may be sent to the core network device periodically.

In an embodiment, in response to the first capability information being updated, first update information is sent to the core network device. In response to the communication system being an NR system, the first update information is sent to the core network device via an NG interface. Or, in response to the communication system being an E-UTRAN system, the first update information is sent to the core network device via an S1 interface.

In an embodiment, an NG interface application protocol signaling may be used to send the first update information to the core network device. The NG interface application protocol signaling is a RAN configuration update signaling.

In an embodiment, an S1 interface may be used to send the first update information to the core network device. The S1 interface application protocol signaling is an eNB configuration update signaling. In an embodiment, a preset field in the eNB configuration update signaling carries update information of capacity information for wireless charging of a second base station connected to the first base station.

In the embodiment of the disclosure, the first capability information for wireless charging is sent to the core network device. The first capability information is at least configured to indicate whether the first base station supports the wireless charging capability. In this way, the core network device can receive the first capability information and determine whether the first base station supports wireless charging based on the first capability information, so that it can perform an operation for charging configuration of the first base station according to whether the first base station supports the wireless charging.

It is noted that, those skilled in the art may understand that the method provided by the embodiment of the disclosure may be performed alone or together with some methods in the embodiments of the disclosure or some methods in the related art.

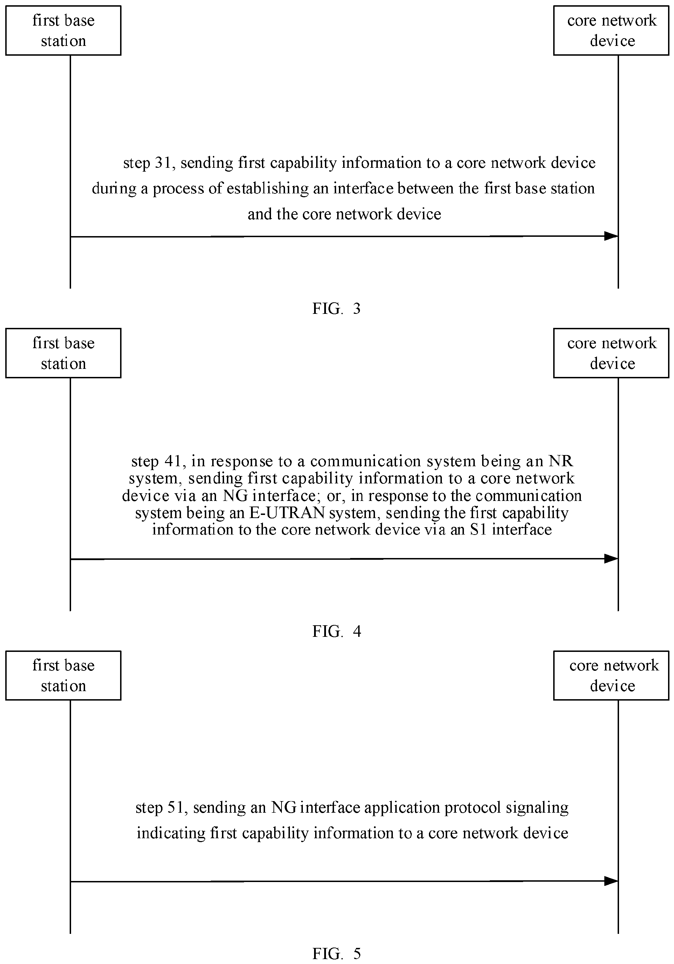

As illustrated in FIG. 3, the embodiment of the disclosure provides a method for transmitting capability information, which is executed by a first base station. The method includes the following steps.

At step 31, first capability information is sent to a core network device during a process of establishing an interface between the first base station and the core network device.

In an embodiment, if a communication system is an NR system, the interface is an NG interface, and an NG interface application protocol signaling is used to send the first capability information to the core network device. The NG interface application protocol signaling may be an NG interface establishment request signaling.

In an embodiment, if the communication system is an E-UTRAN system, the interface is an S1 interface, and an S1 interface application protocol signaling is used to send the first capability information to the core network device. The S1 interface application protocol signaling may be an S1 interface establishment request signaling.

In an embodiment, the first base station may send capability information for wireless charging of a second base station connected to the first base station to the core network device.

In an embodiment, the first capability information includes one or more of the followings:
support information, configured to indicate whether a base station supports wireless charging or not;
power information, configured to indicate a power for wireless charging supported by the base station; and
time information, configured to indicate a duration for wireless charging supported by the base station.

It is noted that, those skilled in the art may understand that the method provided by the embodiment of the disclosure may be performed alone or together with some methods in the embodiments of the disclosure or some methods in the related art.

As illustrated in FIG. 4, the embodiment of the disclosure provides a method for transmitting capability information, which is executed by a first base station. The method includes the following steps.

At step 41, in response to a communication system being an NR system, first capability information is sent to a core network device via an NG interface;
or,
in response to the communication system being an E-UTRAN system, the first capability information is sent to the core network device via an S1 interface.

In an embodiment, the communication system is the NR system. In response to the first base station receiving a request message for obtaining the first capability information sent by the core network device, the first capability information for wireless charging is sent to the core network device via the NG interface.

In an embodiment, the communication system is the E-UTRAN system. In response to the first base station receiving the request message for obtaining the first capability information sent by the core network device, the first capability information for wireless charging is sent to the core network device via the S1 interface.

In an embodiment, the communication system is the NR system. In response to a connection between the first base station and the core network device being established, the first capability information for wireless charging is sent to the core network device via the NG interface.

In an embodiment, the communication system is the E-UTRAN system. In response to the connection between the first base station and the core network device being established, the first capability information for wireless charging is sent to the core network device via the S1 interface.

In an embodiment, the communication system is the NR system. In response to the first base station receiving the request message for obtaining the first capability information sent by the core network device, the first capability information for wireless charging and capacity information of a second base station connected to the first base station are sent to the core network device via the NG interface.

In an embodiment, the communication system is the E-UTRAN system. In response to the first base station receiving the request message for obtaining the first capability information sent by the core network device, the first capability information for wireless charging and the capacity information of the second base station connected to the first base station are sent to the core network device via the S1 interface.

In an embodiment, the communication system is the NR system. In response to the connection between the first base station and the core network device being established, the first capability information for wireless charging and the capacity information of the second base station connected to the first base station are sent to the core network device via the NG interface.

In an embodiment, the communication system is the E-UTRAN system. In response to the connection between the first base station and the core network device being established, the first capability information for wireless charging and the capacity information of the second base station connected to the first base station are sent to the core network device via the S1 interface.

It is noted that, those skilled in the art may understand that the method provided by the embodiment of the disclosure may be performed alone or together with some methods in the embodiments of the disclosure or some methods in the related art.

As illustrated in FIG. 5, the embodiment of the disclosure provides a method for transmitting capability information, which is executed by a first base station. The method includes the following steps.

At step 51, an NG interface application protocol signaling indicating first capability information is sent to a core network device.

In an embodiment, the NG interface application protocol signaling is an NG interface establishment request signaling, and a preset field in the NG interface establishment request signaling carries the first capability information.

In an embodiment, the first base station that initiates interface establishment may send the first capability information to an AMF through an NG SETUP REQUEST signaling. That is, the NG SETUP REQUEST signaling carries the first capability information.

In an embodiment, an information element (IE) may be added in the NG SETUP REQUEST signaling, and the newly added IE is used to carry the first capability information.

In an embodiment, an NG-RAN node sends the NG interface establishment request signaling to transmit application layer information about an NG-C interface instance. The NG-RAN node may be the first base station. The first base station may send the NG interface establishment request signaling to the AMF. With reference to Table 1, information contents included in the NG interface establishment request signaling are illustrated.

**Table 1**

| IE/Group Name | | | | Presence | Range | IE type and reference | Semantics description | Criticality | Assigned Criticality |
|---|---|---|---|---|---|---|---|---|---|
| Message Type | | | | M | | 9.3.1.1 | | YES | reject |
| Global RAN Node ID | | | | M | | 9.3.1.5 | | YES | reject |
| RAN Node Name | | | | O | | Printable String (SIZE(1..150, ...)) | | YES | ignore |
| Supported Wireless Charging Capabilities | | | | O | | | | | |
| Supported TA List | | | | | *1* | | Supported TAs in the NG-RAN node. | YES | reject |
| | >Supported TA Item | | | | *1..<maxno ofTACs>* | | | - | |
| | | >>TAC | | M | | 9.3.3.10 | Broadcast TAC | - | |
| | | >>Broadcast PLMN List | | | *1* | | | - | |
| | | | >>>Broadcast PLMN Item | | *1..*<*maxno ofBPLMNs* > | | | - | |
| | | | >>>>PLMN Identity | M | | 9.3.3.5 | Broadcast PLMN | - | |
| | | | >>>>TAI Slice Support List | M | | Slice Support List 9.3.1.17 | Supported S-NSSAIs per TA. | - | |
| | | >>RAT Information | | O | | 9.3.1.125 | RAT information associated with the TAC of the indicated PLMN(s). | YES | reject |
| Default Paging DRX | | | | M | | Paging DRX 9.3.1.90 | | YES | ignore |
| UE Retention Information | | | | O | | 9.3.1.117 | | YES | ignore |

It is noted that, those skilled in the art may understand that the method provided by the embodiment of the disclosure may be performed alone or together with some methods in the embodiments of the disclosure or some methods in the related art.

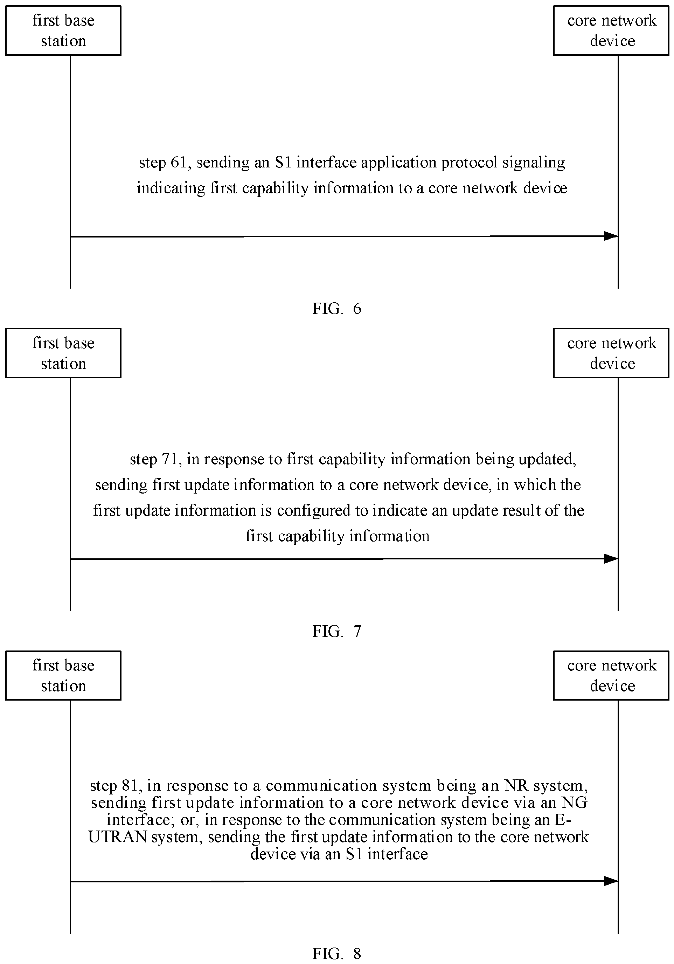

As illustrated in FIG. 6, the embodiment of the disclosure provides a method for transmitting capability information, which is executed by a first base station. The method includes the following steps.

At step 61, an S1 interface application protocol signaling indicating first capability information is sent to a core network device.

In an embodiment, the S1 interface application protocol signaling is an S1 interface establishment request signaling, and a preset field in the S1 interface establishment request signaling carries the first capability information.

In an embodiment, the first base station that initiates interface establishment may send the first capability information and/or capacity information of a second base station connected to the first base station to an MME through an S1 SETUP REQUEST signaling.

In an embodiment, an IE may be added in the S1 SETUP REQUEST signaling. The newly added IE is used to carry the first capability information.

In an embodiment, the preset field in the S1 interface establishment request signaling carries the capacity information for wireless charging of the second base station connected to the first base station.

In an embodiment, the first base station sends the S1 interface establishment request signaling to transmit information associated with a transmission network layer. The first base station may send the S1 interface establishment request signaling to the MME. With reference to Table 2, information contents included in the S1 interface establishment request signaling are illustrated.

**Table 2**

| IE/Group Name | | | | Presence | Range | IE type and reference | Semantics description | Criticality | Assigned Criticality |
|---|---|---|---|---|---|---|---|---|---|
| Message Type | | | | M | | 9.2.1.1 | | YES | reject |
| Global eNB ID | | | | M | | 9.2.1.37 | | YES | reject |
| eNB Name | | | | O | | Printable String(S IZE(1..150,...)) | | YES | ignore |
| Supported Wireless Charging Capabilities | | | | O | | X.X.X.X | | | |
| Supported TAs | | | | | *1..*<*maxnoofTAC* s> | | Supported TAs in the eNB. | GLOBAL | reject |
| | >TAC | | | M | | 9.2.3.7 | Broadcast TAC. | - | |
| | >Broadcast PLMNs | | | | *1..*<*maxnoofBPL MNs>* | | Broadcast PLMNs. | - | |
| | | >>PLMN Identity | | M | | 9.2.3.8 | | | |
| | >RAT-Type | | | O | | 9.2.1.117 | RAT-Type associated with the TAC of the indicated PLMN(s). | YES | reject |
| Default Paging DRX | | | | M | | 9.2.1.16 | | YES | ignore |
| CSG Id List | | | | | *0*..*1* | | | GLOBAL | reject |
| | >CSG Id | | | | *1*.. <*maxnoofCSGIds* > | 9.2.1.62 | | | |
| UE Retention Information | | | | O | | 9.2.1.112 | | YES | ignore |
| NB-IoT Default Paging DRX | | | | O | | 9.2.1.114 | | YES | ignore |
| Connected en-gNB List | | | | | <*0*.. *maxnoofConnecte den-gNBs>* | | | GLOBAL | ignore |
| | >en-gNB ID | | | M | | 9.2.1.37a | | | |
| | >Supported TAs | | | | *1..<maxnoofTAC s*> | | Supported (EPS) TAs in the en-gNB. | - | |
| | | >>Configured TAC | | M | | TAC 9.2.3.7 | This information is used as specified in TS 36.300 [14]. | - | |
| | | >>Broadcast PLMNs | | | *1..* <*maxnoofBPL MNs>* | | Broadcast PLMNs. | - | |
| | | | >>>PLMN Identity | M | | 9.2.3.8 | | | |

It is noted that, those skilled in the art may understand that the method provided by the embodiment of the disclosure may be performed alone or together with some methods in the embodiments of the disclosure or some methods in the related art.

As illustrated in FIG. 7, the embodiment of the disclosure provides a method for transmitting capability information, which is executed by a first base station. The method includes the following steps.

At step 71, in response to first capability information being updated, first update information is sent to a core network device.

The first update information is configured to indicate an update result of the first capability information.

In an embodiment, updating the first capability information may include updating one or more of the followings:
support information, configured to indicate whether a base station supports wireless charging or not;
power information, configured to indicate a power for wireless charging supported by the base station; and
time information, configured to indicate a duration for wireless charging supported by the base station.

In an embodiment, in response to the first base station receiving a request message for obtaining the first update information sent by the core network device and the first capability information being updated, the first update information for wireless charging is sent to the core network device.

In an embodiment, in response to the first base station receiving the request message for obtaining the first update information sent by the core network device and the first capability information being updated, the first update information for wireless charging and update information of a second base station connected to the first base station are sent to the core network device.

In an embodiment, in response to a communication system being an NR system, the first update information is sent to the core network device via an NG interface; or, in response to the communication system being an E-UTRAN system, the first update information is sent to the core network device via an S1 interface.

In an embodiment, the first capability information may be sent to the core network device during a process of establishing an interface between the first base station and the core network device. It should be noted that, if the communication system is an NR system, the interface is an NG interface, and if the communication system is an E-UTRAN system, the interface is an S1 interface.

In an embodiment, the first capability information for wireless charging may be sent to the core network device periodically.

In an embodiment, in response to the first capability information being updated, the first update information is sent to the core network device. In response to the communication system being an NR system, the first update information is sent to the core network device via an NG interface. Or, in response to the communication system being an E-UTRAN system, the first update information is sent to the core network device via an S1 interface.

In an embodiment, an NG interface application protocol signaling may be used to send the first update information to the core network device. The NG interface application protocol signaling is a RAN configuration update signaling.

In an embodiment, an interface may be used to send the first update information to the core network device. The interface application protocol signaling is an eNB configuration update signaling. In an embodiment, a preset field in the eNB configuration update signaling carries update information of capacity information for wireless charging of a second base station connected to the first base station.

It is noted that, those skilled in the art may understand that the method provided by the embodiment of the disclosure may be performed alone or together with some methods in the embodiments of the disclosure or some methods in the related art.

As illustrated in FIG. 8, the embodiment of the disclosure provides a method for transmitting capability information, which is executed by a first base station. The method includes the following steps.

At step 81, in response to a communication system being an NR system, first update information is sent to a core network device via an NG interface;
or,
in response to the communication system being an E-UTRAN system, the first update information is sent to the core network device via an S1 interface.

In an embodiment, the communication system is the NR system. In response to the first base station receiving a request message for obtaining the first update information sent by the core network device, the first update information for wireless charging is sent to the core network device via the NG interface.

In an embodiment, the communication system is the E-UTRAN system. In response to the first base station receiving the request message for obtaining the first update information sent by the core network device, the first update information for wireless charging is sent to the core network device via the S1 interface.

In an embodiment, the communication system is the NR system. In response to the first base station receiving the request message for obtaining the first update information sent by the core network device, the first update information for wireless charging and update information of a second base station connected to the first base station are sent to the core network device via the NG interface.

In an embodiment, the communication system is the E-UTRAN system. In response to the first base station receiving the request message for obtaining the first update information sent by the core network device, the first update information for wireless charging and the update information of the second base station connected to the first base station are sent to the core network device via the S1 interface.

It is noted that, those skilled in the art may understand that the method provided by the embodiment of the disclosure may be performed alone or together with some methods in the embodiments of the disclosure or some methods in the related art.

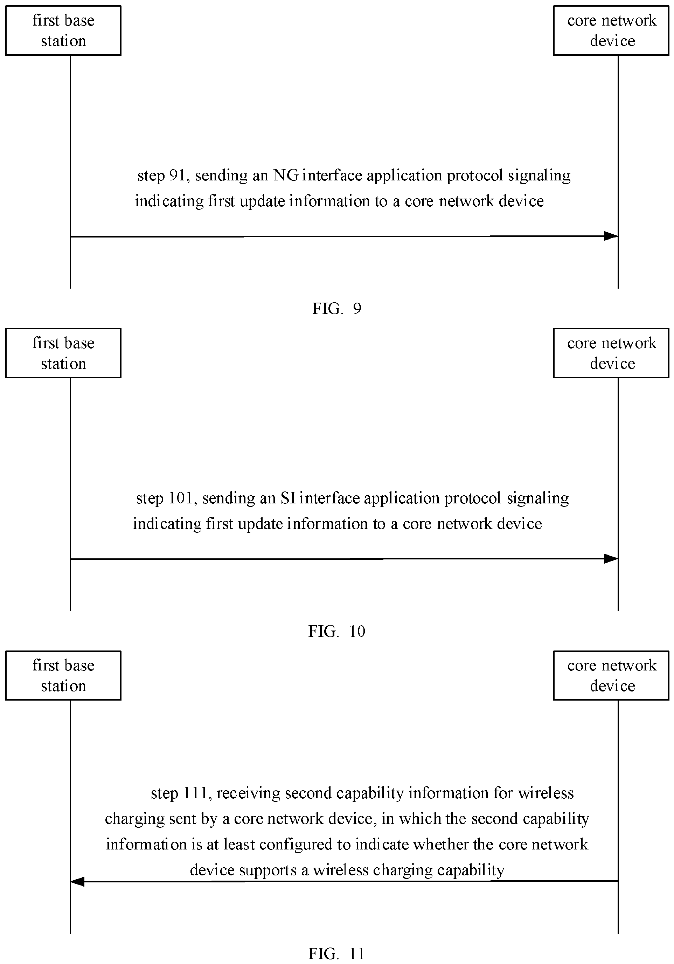

As illustrated in FIG. 9, the embodiment of the disclosure provides a method for transmitting capability information, which is executed by a first base station. The method includes the following steps.

At step 91, an NG interface application protocol signaling indicating first update information is sent to a core network device.

In an embodiment, the NG interface application protocol signaling is a RAN configuration update signaling, and a preset field of the RAN configuration update signaling carries the first update information.

In an embodiment, when a wireless charging capability supported by the first base station changes, a RAN CONFIGURATION UPDATE signaling may be used to send the first update information. That is, a new IE may be added in the RAN CONFIGURATION UPDATE signaling to carry the first update information.

It is noted that, those skilled in the art may understand that the method provided by the embodiment of the disclosure may be performed alone or together with some methods in the embodiments of the disclosure or some methods in the related art.

As illustrated in FIG. 10, the embodiment of the disclosure provides a method for transmitting capability information, which is executed by a first base station. The method includes the following steps.

At step 101, an S1 interface application protocol signaling indicating first update information is sent to a core network device.

In an embodiment, the S1 interface application protocol signaling is an eNB configuration update signaling, and a preset field of the eNB configuration update signaling carries the first update information.

In an embodiment, the preset field in the eNB configuration update signaling carries update information of capacity information for wireless charging of a second base station connected to the first base station.

In an embodiment, when a wireless charging capability supported by the first base station changes, an ENB CONFIGURATION UPDATE signaling may be used to send the first update information. That is, a new IE may be added in the ENB CONFIGURATION UPDATE signaling to carry the first update information.

In an embodiment, when a wireless charging capability supported by the second base station connected to the first base station changes, a new IE may be added in a Connected en-gNB To Be Added List or a Connected en-gNB To Be Removed List IE in the ENB CONFIGURATION UPDATE signaling to indicate the wireless charging capability supported by the second base station connected to the first base station.

It is noted that, those skilled in the art may understand that the method provided by the embodiment of the disclosure may be performed alone or together with some methods in the embodiments of the disclosure or some methods in the related art.

In an embodiment, the first capability information includes one or more of the followings:
support information, configured to indicate whether a base station supports wireless charging or not;
power information, configured to indicate a power for wireless charging supported by the base station; and
time information, configured to indicate a duration for wireless charging supported by the base station.

As illustrated in FIG. 11, the embodiment of the disclosure provides a method for transmitting capability information, which is executed by a first base station. The method includes the following steps.

At step 111, second capability information for wireless charging sent by a core network device is received.

The second capability information is at least configured to indicate whether the core network device supports a wireless charging capability.

The first base station is an interface device for a terminal to access a network.

In some embodiments, the terminal may include, but is not limited to, a cell phone, a wearable device, an in-vehicle terminal, a RSU, a smart home terminal, an industrial sensing device, or a medical device, etc.

In some embodiments, the first base station may be any type of base station, such as, a 3G base station, a 4G base station, a 5G base station, or other evolved base stations.

In some embodiments, the core network device may be an AMF or a MME, etc. It should be noted that, when a wireless communication system is an NR system, the core network device may be the AMF, and when the wireless communication system is an E-UTRAN system, the core network device may be the MME.

Wireless charging may use a spatial electric field as a medium to transfer energy. The first base station may use a large number of antennas to transfer the energy to the core network device in a form of extremely narrow beams of millimeter wave, and the core network device receives the energy through a micro-beacon antenna, thereby realizing long-distance wireless charging.

The wireless charging may use the spatial electric field as the medium to transfer energy. The core network device may use a large number of antennas to transfer the energy to the first base station in the form of extremely narrow beams of millimeter wave, and the first base station receives the energy through a micro-beacon antenna, thereby realizing long-distance wireless charging.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

In an embodiment, the support information is configured to indicate that the core network device supports the wireless charging. In another embodiment, the support information is configured to indicate that the core network device does not support the wireless charging.

In an embodiment, the power information is configured to indicate a maximum power and/or a rated power for wireless charging supported by the core network device.

In an embodiment, the time information is configured to indicate a duration for wireless charging supported by the core network device. For example, the time information is configured to indicate that the duration for wireless charging supported by the core network device is from 9:00 p.m. to 4:00 a.m. The duration may be represented by start time information and end time information, or represented by start time information and duration information. For example, the time information is that the start time is moment a, and the duration is b hours.

In an embodiment, in response to the core network device receiving a request message for obtaining the second capability information sent by the first base station, the second capability information for wireless charging is sent to the first base station.

In an embodiment, in response to a connection between the first base station and the core network device being established, the second capability information for wireless charging is sent to the first base station.

In an embodiment, the second capability information may be sent to the first base station during a process of establishing an interface between the first base station and the core network device. It should be noted that, if a communication system is an NR system, the interface is an NG interface, and if the communication system is an E-UTRAN system, the interface is an S1 interface.

In an embodiment, the second capability information for wireless charging may be sent to the first base station periodically.

In an embodiment, in response to the second capability information being updated, second update information is sent to the first base station. In response to the communication system being an NR system, the second update information is sent to the first base station via an NG interface. Or, in response to the communication system being an E-UTRAN system, the second update information is sent to the first base station via an S1 interface.

In an embodiment, an NG interface application protocol signaling may be used to send the second update information to the first base station. The NG interface application protocol signaling is an NG interface establishment response signaling.

In an embodiment, an S1 interface may be used to send the second update information to the first base station. The S1 interface application protocol signaling is an S1 interface establishment response signaling.

It is noted that, those skilled in the art may understand that the method provided by the embodiment of the disclosure may be performed alone or together with some methods in the embodiments of the disclosure or some methods in the related art.

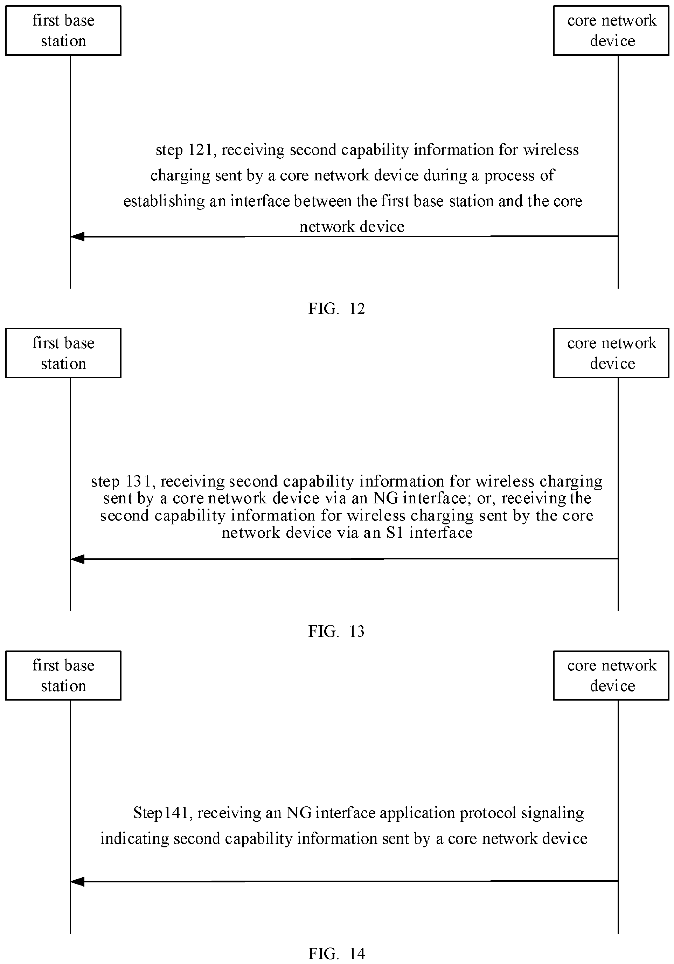

As illustrated in FIG. 12, the embodiment of the disclosure provides a method for transmitting capability information, which is executed by a first base station. The method includes the following steps.

At step 121, second capability information for wireless charging sent by a core network device is received during a process of establishing an interface between the first base station and the core network device.

In an embodiment, if a communication system is an NR system, the interface is an NG interface, and an NG interface application protocol signaling is used to send the second capability information to the first base station. The NG interface application protocol signaling may be an NG interface establishment response signaling.

In an embodiment, if the communication system is an E-UTRAN system, the interface is an S1 interface, and an interface application protocol signaling is used to send the second capability information to the first base station. The S1 interface application protocol signaling may be an S1 interface establishment response signaling.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

It is noted that, those skilled in the art may understand that the method provided by the embodiment of the disclosure may be performed alone or together with some methods in the embodiments of the disclosure or some methods in the related art.

As illustrated in FIG. 13, the embodiment of the disclosure provides a method for transmitting capability information, which is executed by a first base station. The method includes the following steps.

At step 131, second capability information for wireless charging sent by a core network device is received via an NG interface;
or,
the second capability information for wireless charging sent by the core network device is received via an S1 interface.

In an embodiment, a communication system is the NR system. In response to the core network device receiving a request message for obtaining the second capability information sent by the first base station, the second capability information for wireless charging is sent to the first base station via the NG interface.

In an embodiment, the communication system is the E-UTRAN system. In response to the core network device receiving the request message for obtaining the second capability information sent by the first base station, the second capability information for wireless charging is sent to the first base station via the S1 interface.

In an embodiment, the communication system is the NR system. In response to a connection between the first base station and the core network device being established, the second capability information for wireless charging is sent to the first base station via the NG interface.

In an embodiment, the communication system is the E-UTRAN system. In response to the connection between the first base station and the core network device being established, the second capability information for wireless charging is sent to the first base station via the S1 interface.

It is noted that, those skilled in the art may understand that the method provided by the embodiment of the disclosure may be performed alone or together with some methods in the embodiments of the disclosure or some methods in the related art.

As illustrated in FIG. 14, the embodiment of the disclosure provides a method for transmitting capability information, which is executed by a first base station. The method includes the following steps.

At step 141, an NG interface application protocol signaling indicating second capability information sent by a core network device is received.

In an embodiment, the NG interface application protocol signaling is an NG interface establishment response signaling, and a preset field in the NG interface establishment response signaling carries the second capability information.

In an embodiment, the core network device may send the second capability information to the first base station that initiates interface establishment through an NG SETUP RESPONSE signaling. That is, the NG SETUP RESPONSE signaling carries the second capability information.

In an embodiment, an IE may be added in the NG SETUP RESPONSE signaling, and the newly added IE is used to carry the second capability information.

In an embodiment, an AMF sends the NG interface establishment response signaling to transmit application layer information about an NG-C interface instance. The AMF may send the NG interface establishment response signaling to the first base station. With reference to Table 3, information contents included in the NG interface establishment response signaling are illustrated.

**Table 3**

| IE/Group Name | | | Presence | Range | IE type and reference | Semantics description | Criticality | Assigned Criticality |
|---|---|---|---|---|---|---|---|---|
| Message Type | | | M | | 9.3.1.1 | | YES | reject |
| AMF Name | | | M | | 9.3.3.21 | | YES | reject |
| Supported Wireless Charging Capabilities | | | O | | | | | |
| Served GUAMI List | | | | *1* | | | YES | reject |
| | >Served GUAMI Item | | | *1..<maxno ofServedG UAMIs>* | | | - | |
| | | >>GUAMI | M | | 9.3.3.3 | | - | |
| | | >>Backup AMF Name | O | | AMF Name 9.3.3.21 | | - | |
| | | >>GUAMI Type | O | | ENUMERATED (native, mapped, ...) | | YES | ignore |
| Relative AMF Capacity | | | M | | 9.3.1.32 | | YES | ignore |
| PLMN Support List | | | | *1* | | | YES | reject |
| | >PLMN Support Item | | | *1..<maxno ofPLMNs>* | | | - | |
| | | >>PLMN Identity | M | | 9.3.3.5 | | - | |
| | | >>Slice Support List | M | | 9.3.1.17 | Supported S-NSSAIs per PLMN | - | |
| Criticality Diagnostics | | | O | | 9.3.1.3 | | YES | ignore |
| UE Retention Information | | | O | | 9.3.1.117 | | YES | ignore |

It is noted that, those skilled in the art may understand that the method provided by the embodiment of the disclosure may be performed alone or together with some methods in the embodiments of the disclosure or some methods in the related art.

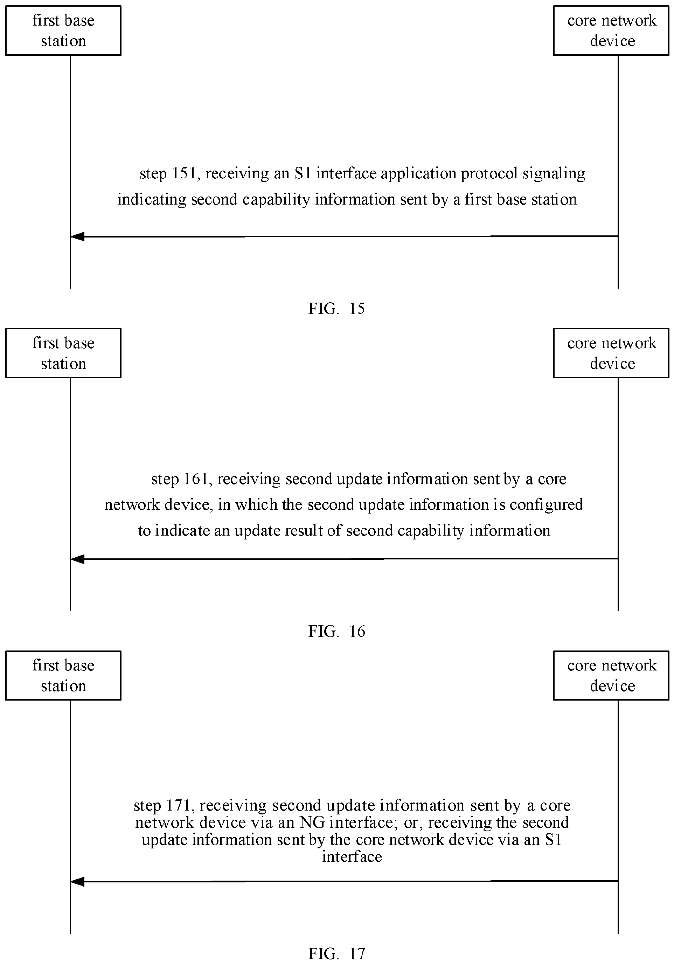

As illustrated in FIG. 15, the embodiment of the disclosure provides a method for transmitting capability information, which is executed by a first base station. The method includes the following steps.

At step 151, an interface application protocol signaling indicating second capability information sent by the first base station is received.

In an embodiment, the interface application protocol signaling is an S1 interface establishment response signaling, and a preset field in the S1 interface establishment response signaling carries the second capability information.

In an embodiment, the core network device may send the second capability information to the first base station that initiates interface establishment via an S1 SETUP RESPONSE signaling.

In an embodiment, an IE may be added in the S1 SETUP RESPONSE signaling, and the newly added IE is used to carry the second capability information.

In an embodiment, an MME sends the S1 interface establishment response signaling to transmit information associated with a transmission network layer. The MME may send the S1 interface establishment response signaling to the first base station. With reference to Table 4, information contents included in the S1 interface establishment response signaling are illustrated.

**Table 4**

| IE/Group Name | | | Presence | Range | IE type and reference | Semantics description | Criticality | Assigned Criticality |
|---|---|---|---|---|---|---|---|---|
| Message Type | | | M | | 9.2.1.1 | | YES | reject |
| MME Name | | | O | | Printable String(SIZE( 1..150,...)) | | YES | ignore |
| Supported Wireless Charging Capabilities | | | O | | X.X.X.X | | | |
| Served GUMMEIs | | | | *1..*<*maxnoofRA Ts>* | | The LTE related pool configuration is included on the first place in the list. | GLOBAL | reject |
| | >Served PLMNs | | | 1..<maxnoofPL MNsPerMME> | | | - | |
| | | >>PLMN Identity | M | | 9.2.3.8 | | - | |
| | >Served GroupIDs | | | *1..<maxnoofGr oupIDs>* | | | - | |
| | | >>MME Group ID | M | | OCTET STRING (SIZE(2)) | | - | |
| | >Served MMECs | | | *1..*<*maxnoofM MECs>* | | | - | |
| | | >>MME Code | M | | 9.2.3.12 | | - | |
| | >GUMMEI Type | | O | | ENUMERATED (native, mapped, ..., mappedFrom5G) | | - | ignore |
| Relative MME Capacity | | | M | | 9.2.3.17 | | YES | ignore |
| MME Relay Support Indicator | | | O | | 9.2.1.82 | | YES | ignore |
| Criticality Diagnostics | | | O | | 9.2.1.21 | | YES | ignore |
| UE Retention Information | | | O | | 9.2.1.112 | | YES | ignore |
| Served DCNs | | | | *0..* <*maxnoofD CNs>* | | | GLOBAL | ignore |
| | >Served DCNs Items | | M | | 9.2.1.121 | | - | |

It is noted that, those skilled in the art may understand that the method provided by the embodiment of the disclosure may be performed alone or together with some methods in the embodiments of the disclosure or some methods in the related art.

As illustrated in FIG. 16, the embodiment of the disclosure provides a method for transmitting capability information, which is executed by a first base station. The method includes the following steps.

At step 161, second update information sent by a core network device is received.

The second update information is configured to indicate an update result of second capability information.

In an embodiment, updating the second capability information may include updating one or more of the followings:
support information, configured to indicate whether the core network device supports wireless charging or not;
power information, configured to indicate a power for wireless charging supported by the core network device; and
time information, configured to indicate a duration for wireless charging supported by the core network device.

In an embodiment, in response to the core network device receiving a request message for obtaining the second update information sent by the first base station and the second capability information being updated, the second update information for wireless charging is sent to the first base station.

In an embodiment, in response to a communication system being an NR system, the second update information is sent to the first base station via an NG interface; or, in response to the communication system being an E-UTRAN system, the second update information is sent to the first base station via an S1 interface.

In an embodiment, in response to the second capability information being updated, the second update information is sent to the first base station. In response to the communication system being an NR system, the second update information is sent to the first base station via an NG interface; or, in response to the communication system being an E-UTRAN system, the second update information is sent to the first base station via an S1 interface.

In an embodiment, an NG interface application protocol signaling may be used to send the second update information to the first base station. The NG interface application protocol signaling is an AMF CONFIGURATION UPDATE signaling.

In an embodiment, an S1 interface may be used to send the second update information to the first base station. The S1 interface application protocol signaling is a MME CONFIGURATION UPDATE signaling.

It is noted that, those skilled in the art may understand that the method provided by the embodiment of the disclosure may be performed alone or together with some methods in the embodiments of the disclosure or some methods in the related art.

As illustrated in FIG. 17, the embodiment of the disclosure provides a method for transmitting capability information, which is executed by a first base station. The method includes the following steps.

At step 171, second update information sent by a core network device is received via an NG interface;
or,
the second update information sent by the core network device is received via an S1 interface.

In an embodiment, the communication system is the NR system. In response to the core network device receiving a request message for obtaining the second update information sent by the first base station, the second update information for wireless charging is sent to the first base station via the NG interface.

In an embodiment, the communication system is the E-UTRAN system. In response to the core network device receiving the request message for obtaining the second update information sent by the first base station, the second update information for wireless charging is sent to the first base station via the S1 interface.

It is noted that, those skilled in the art may understand that the method provided by the embodiment of the disclosure may be performed alone or together with some methods in the embodiments of the disclosure or some methods in the related art.

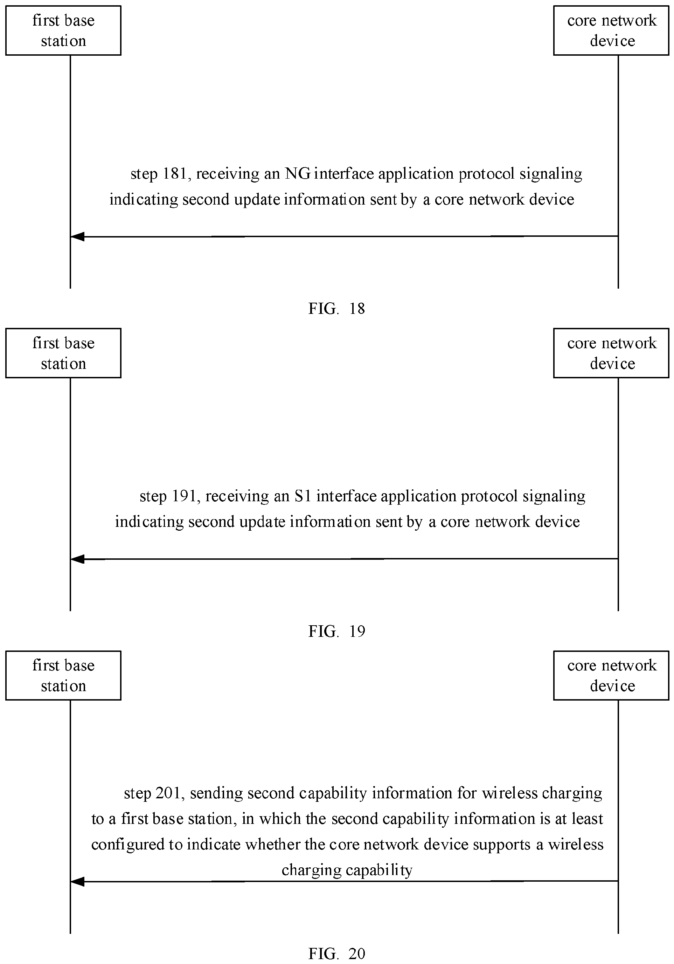

As illustrated in FIG. 18, the embodiment of the disclosure provides a method for transmitting capability information, which is executed by a first base station. The method includes the following steps.

At step 181, an NG interface application protocol signaling indicating second update information sent by a core network device is received.

In an embodiment, the NG interface application protocol signaling is an AMF configuration update signaling, and a preset field of the AMF configuration update signaling carries the second update information.

In an embodiment, when a wireless charging capability supported by the core network device changes, the second update information can be sent using an AMF CONFIGURATION UPDATE signaling. That is, a new IE can be added in the AMF CONFIGURATION UPDATE signaling to carry the second update information.

It is noted that, those skilled in the art may understand that the method provided by the embodiment of the disclosure may be performed alone or together with some methods in the embodiments of the disclosure or some methods in the related art.

As illustrated in FIG. 19, the embodiment of the disclosure provides a method for transmitting capability information, which is executed by a first base station. The method includes the following steps.

At step 191, an S1 interface application protocol signaling indicating second update information sent by a core network device is received.

In an embodiment, the interface application protocol signaling is an MME configuration update signaling, and a preset field of the MME configuration update signaling carries the second update information.

In an embodiment, when a wireless charging capability supported by the core network device changes, an MME CONFIGURATION UPDATE signaling may be used to send the second update information. That is, a new IE may be added in the MME CONFIGURATION UPDATE signaling to carry the first update information.

It is noted that, those skilled in the art may understand that the method provided by the embodiment of the disclosure may be performed alone or together with some methods in the embodiments of the disclosure or some methods in the related art.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

As illustrated in FIG. 20, the embodiment of the disclosure provides a method for transmitting capability information, which is executed by a core network device. The method includes the following steps.

At step 201, second capability information for wireless charging is sent to a first base station.

The second capability information is at least configured to indicate whether the core network device supports a wireless charging capability.

The first base station is an interface device for a terminal to access a network.

In some embodiments, the terminal may include, but is not limited to, a cell phone, a wearable device, an in-vehicle terminal, a RSU, a smart home terminal, an industrial sensing device, or a medical device, etc.

In some embodiments, the first base station may be any type of base station, such as, a 3G base station, a 4G base station, a 5G base station, or other evolved base stations.

In some embodiments, the core network device may be an AMF or a MME, etc. It should be noted that when a wireless communication system is an NR system, the core network device maybe the AMF, and when the wireless communication system is an E-UTRAN system, the core network device maybe the MME.

Wireless charging may use a spatial electric field as a medium to transfer energy. The first base station may use a large number of antennas to transfer the energy to the core network device in a form of extremely narrow beams of millimeter wave, and the core network device receives the energy through a micro-beacon antenna, thereby realizing long-distance wireless charging.

The wireless charging may use the spatial electric field as the medium to transfer energy. The core network device may use a large number of antennas to transfer the energy to the first base station in the form of extremely narrow beams of millimeter wave, and the first base station receives the energy through a micro-beacon antenna, thereby realizing long-distance wireless charging.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

In an embodiment, the support information is configured to indicate that the core network device supports the wireless charging. In another embodiment, the support information is configured to indicate that the core network device does not support the wireless charging.

In an embodiment, the power information is configured to indicate a maximum power and/or a rated power for wireless charging supported by the core network device.

In an embodiment, the time information is configured to indicate a duration for wireless charging supported by the core network device. For example, the time information is configured to indicate that the duration for wireless charging supported by the core network device is from 9:00 p.m. to 4:00 a.m. The duration may be represented by start time information and end time information, or represented bystart time information and duration information. For example, the time information is that the start time is moment a, and the duration is b hours.

In an embodiment, in response to the core network device receiving a request message for obtaining the second capability information sent by the first base station, the second capability information for wireless charging is sent to the first base station.

In an embodiment, in response to a connection between the first base station and the core network device being established, the second capability information for wireless charging is sent to the first base station.

In an embodiment, the second capability information may be sent to the first base station during a process of establishing an interface between the first base station and the core network device. It should be noted that, if a communication system is an NR system, the interface is an NG interface, and if the communication system is an E-UTRAN system, the interface is an S1 interface.

In an embodiment, the second capability information for wireless charging may be sent to the first base station periodically.

In an embodiment, in response to the second capability information being updated, second update information is sent to the first base station. In response to the communication system being an NR system, the second update information is sent to the first base station via an NG interface. Or, in response to the communication system being an E-UTRAN system, the second update information is sent to the first base station via an S1 interface.

In an embodiment, an NG interface application protocol signaling may be used to send the second update information to the first base station. The NG interface application protocol signaling is an NG interface establishment response signaling.

In an embodiment, an interface may be used to send the second update information to the first base station. The S1 interface application protocol signaling is an S1 interface establishment response signaling.

It is noted that, those skilled in the art may understand that the method provided by the embodiment of the disclosure may be performed alone or together with some methods in the embodiments of the disclosure or some methods in the related art.

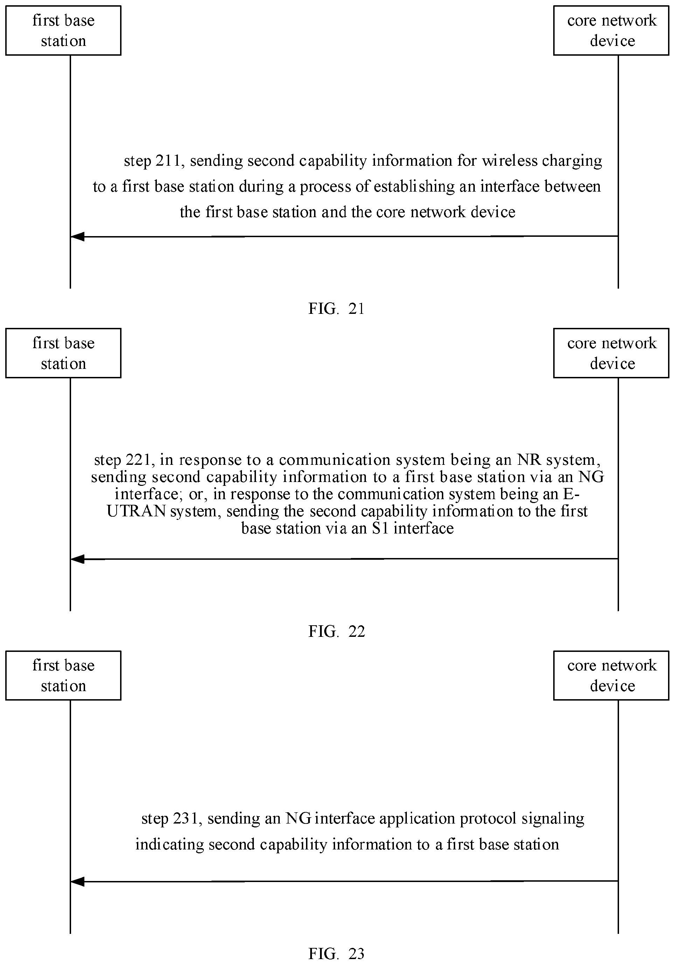

As illustrated in FIG. 21, the embodiment of the disclosure provides a method for transmitting capability information, which is executed by a core network device. The method includes the following steps.

At step 211, second capability information for wireless charging is sent to a first base station during a process of establishing an interface between the first base station and the core network device.

In an embodiment, if a communication system is an NR system, the interface is an NG interface. AN NG interface application protocol signaling is used to send the second capability information to the first base station. The NG interface application protocol signaling may be an NG interface establishment response signaling.

In an embodiment, if the communication system is an E-UTRAN system, the interface is an S1 interface, and an S1 interface application protocol signaling is used to send the second capability information to the first base station. The S1 interface application protocol signaling may be an S1 interface establishment response signaling.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

It is noted that, those skilled in the art may understand that the method provided by the embodiment of the disclosure may be performed alone or together with some methods in the embodiments of the disclosure or some methods in the related art.

As illustrated in FIG. 22, the embodiment of the disclosure provides a method for transmitting capability information, which is executed by a core network device. The method includes the following steps.

At step 221, in response to a communication system being an NR system, second capability information is sent to a first base station via an NG interface;
or,
in response to the communication system being an E-UTRAN system, the second capability information is sent to the first base station via an S1 interface.

In an embodiment, the communication system is the NR system. In response to the core network device receiving a request message for obtaining the second capability information sent by the first base station, the second capability information for wireless charging is sent to the first base station via the NG interface.

In an embodiment, the communication system is the E-UTRAN system. In response to the core network device receiving the request message for obtaining the second capability information sent by the first base station, the second capability information for wireless charging is sent to the first base station via the S1 interface.

In an embodiment, the communication system is the NR system. In response to a connection between the first base station and the core network device being established, the second capability information for wireless charging is sent to the first base station via the NG interface.

In an embodiment, the communication system is the E-UTRAN system. In response to the connection between the first base station and the core network device being established, the second capability information for wireless charging is sent to the first base station via the S1 interface.

It is noted that, those skilled in the art may understand that the method provided by the embodiment of the disclosure may be performed alone or together with some methods in the embodiments of the disclosure or some methods in the related art.

As illustrated in FIG. 23, the embodiment of the disclosure provides a method for transmitting capability information, which is executed by a core network device. The method includes the following steps.

At step 231, an NG interface application protocol signaling indicating second capability information is sent to a first base station.

In an embodiment, the NG interface application protocol signaling is an NG interface establishment response signaling, and a preset field in the NG interface establishment response signaling carries the second capability information.

In an embodiment, the core network device may send the second capability information to the first base station that initiates interface establishment via an NG SETUP RESPONSE signaling. That is, the NG SETUP RESPONSE signaling carries the second capability information.

In an embodiment, an IE may be added in the NG SETUP RESPONSE signaling, and the newly added IE is used to carry the second capability information.

It is noted that, those skilled in the art may understand that the method provided by the embodiment of the disclosure may be performed alone or together with some methods in the embodiments of the disclosure or some methods in the related art.

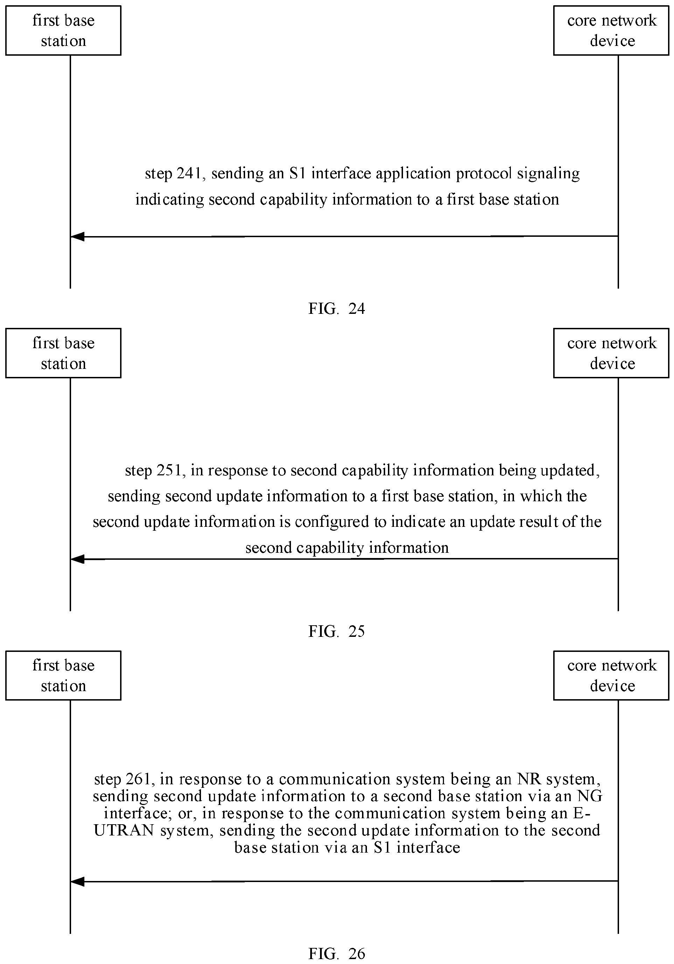

As illustrated in FIG. 24, the embodiment of the disclosure provides a method for transmitting capability information, which is executed by a core network device. The method includes the following steps.

At step 241, an interface application protocol signaling indicating second capability information is sent to a first base station.

In an embodiment, the interface application protocol signaling is an S1 interface establishment response signaling, and a preset field in the S1 interface establishment response signaling carries the second capability information.

In an embodiment, the core network device may send the second capability information to the first base station that initiates interface establishment via an S1 SETUP RESPONSE signaling.

In an embodiment, an IE may be added in the S1 SETUP RESPONSE signaling, and the newly added IE is used to carry the second capability information.

It is noted that, those skilled in the art may understand that the method provided by the embodiment of the disclosure may be performed alone or together with some methods in the embodiments of the disclosure or some methods in the related art.

As illustrated in FIG. 25, the embodiment of the disclosure provides a method for transmitting capability information, which is executed by a core network device. The method includes the following steps.

At step 251, in response to second capability information being updated, second update information is sent to a first base station.

The second update information is configured to indicate an update result of the second capability information.

In an embodiment, updating the second capability information may include updating one or more of the followings:
support information, configured to indicate whether the core network device supports wireless charging or not;
power information, configured to indicate a power for wireless charging supported by the core network device; and
time information, configured to indicate a duration for wireless charging supported by the core network device.

In an embodiment, in response to the core network device receiving a request message for obtaining the second update information sent by the first base station and the second capability information being updated, the second update information for wireless charging is sent to the first base station.

In an embodiment, in response to a communication system being an NR system, the second update information is sent to the first base station via an NG interface; or, in response to the communication system being an E-UTRAN system, the second update information is sent to the first base station via an S1 interface.

In an embodiment, in response to the second capability information being updated, the second update information is sent to the first base station. In response to the communication system being an NR system, the second update information is sent to the first base station via an NG interface; or, in response to the communication system being an E-UTRAN system, the second update information is sent to the first base station via an S1 interface.

In an embodiment, an NG interface application protocol signaling may be used to send the second update information to the first base station. The NG interface application protocol signaling is an AMF CONFIGURATION UPDATE signaling.

In an embodiment, an S1 interface may be used to send the second update information to the core network device. The interface application protocol signaling is a MME CONFIGURATION UPDATE signaling.

It is noted that, those skilled in the art may understand that the method provided by the embodiment of the disclosure may be performed alone or together with some methods in the embodiments of the disclosure or some methods in the related art.

As illustrated in FIG. 26, the embodiment of the disclosure provides a method for transmitting capability information, which is executed by a core network device. The method includes the following steps.

At step 261, in response to a communication system being an NR system, second update information is sent to a second base station via an NG interface;
or,
in response to the communication system being an E-UTRAN system, the second update information is sent to the second base station via an S1 interface.

In an embodiment, the communication system is the NR system. In response to the core network device receiving a request message for obtaining the second update information sent by the first base station, the second update information for wireless charging is sent to the first base station via the NG interface.

In an embodiment, the communication system is the E-UTRAN system. In response to the core network device receiving the request message for obtaining the second update information sent by the first base station, the second update information for wireless charging is sent to the first base station via the S1 interface.

It is noted that, those skilled in the art may understand that the method provided by the embodiment of the disclosure may be performed alone or together with some methods in the embodiments of the disclosure or some methods in the related art.

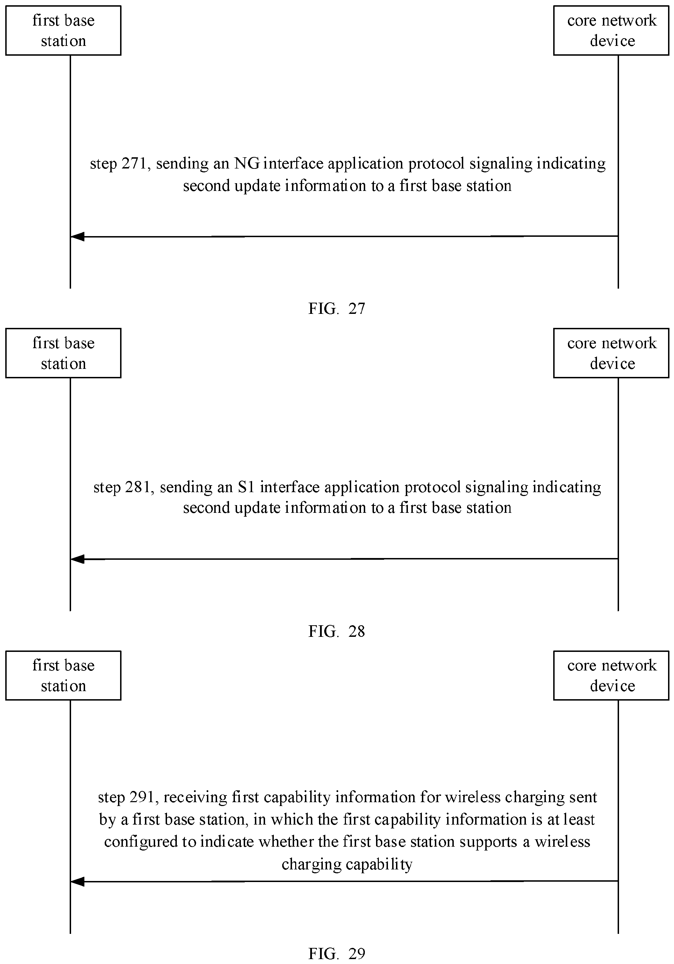

As illustrated in FIG. 27, the embodiment of the disclosure provides a method for transmitting capability information, which is executed by a core network device. The method includes the following steps.

At step 271, an NG interface application protocol signaling indicating second update information is sent to a first base station.

In an embodiment, the NG interface application protocol signaling is an AMF configuration update signaling, and a preset field of the AMF configuration update signaling carries the second update information.

In an embodiment, when a wireless charging capability supported by the core network device changes, the second update information can be sent using an AMF CONFIGURATION UPDATE signaling. That is, a new IE can be added in the AMF CONFIGURATION UPDATE signaling to carry the second update information.

It is noted that, those skilled in the art may understand that the method provided by the embodiment of the disclosure may be performed alone or together with some methods in the embodiments of the disclosure or some methods in the related art.

As illustrated in FIG. 28, the embodiment of the disclosure provides a method for transmitting capability information, which is executed by a core network device. The method includes the following steps.

At step 281, an S1 interface application protocol signaling indicating second update information is sent to a first base station.

In an embodiment, the S1 interface application protocol signaling is an MME configuration update signaling, and a preset field of the MME configuration update signaling carries the second update information.

In an embodiment, the S1 interface application protocol signaling is the MME configuration update signaling, and a preset field of the MME configuration update signaling carries the second update information.

In an embodiment, when a wireless charging capability supported by the core network device changes, an MME CONFIGURATION UPDATE signaling may be used to send the second update information. That is, a new IE may be added in the MME CONFIGURATION UPDATE signaling to carry the second update information.

It is noted that, those skilled in the art may understand that the method provided by the embodiment of the disclosure may be performed alone or together with some methods in the embodiments of the disclosure or some methods in the related art.

In an embodiment, the second capability information includes one or more of the followings:
support information, configured to indicate whether the core network device supports wireless charging or not;
power information, configured to indicate a power for wireless charging supported by the core network device; and
time information, configured to indicate a duration for wireless charging supported by the core network device.

As illustrated in FIG. 29, the embodiment of the disclosure provides a method for transmitting capability information, which is executed by a core network device. The method includes the following steps.

At step 291, first capability information for wireless charging sent by a first base station is received.

The first capability information is at least configured to indicate whether the first base station supports a wireless charging capability.

The first base station is an interface device for a terminal to access a network.

In some embodiments, the terminal may include, but is not limited to, a cell phone, a wearable device, an in-vehicle terminal, a RSU, a smart home terminal, an industrial sensing device, or a medical device, etc.

In some embodiments, the first base station may be any type of base station, such as, a 3G base station, a 4G base station, a 5G base station, or other evolved base stations.

In some embodiments, the core network device may be an AMF or a MME, etc. It should be noted that, when a wireless communication system is an NR system, the core network device may be the AMF, and when the wireless communication system is an E-UTRAN system, the core network device may be the MME.

Wireless charging may use a spatial electric field as a medium to transfer energy. The core network device may use a large number of antennas to transfer the energy to the first base station in a form of extremely narrow beams of millimeter wave, and the first base station receives the energy through a micro-beacon antenna, thereby realizing long-distance wireless charging.

The wireless charging may use the spatial electric field as the medium to transfer energy. The first base station may use a large number of antennas to transfer the energy to the core network device in the form of extremely narrow beams of millimeter wave, and the core network device receives the energy through a micro-beacon antenna, thereby realizing long-distance wireless charging.

In an embodiment, the first capability information includes one or more of the followings:
support information, configured to indicate whether the base station supports wireless charging or not;
power information, configured to indicate a power for wireless charging supported by the base station; and
time information, configured to indicate a duration for wireless charging supported by the base station.

In an embodiment, the support information is configured to indicate that the first base station supports the wireless charging. In another embodiment, the support information is configured to indicate that the first base station does not support the wireless charging.

In an embodiment, the power information is configured to indicate a maximum power and/or a rated power for wireless charging supported by the first base station.

In an embodiment, the time information is configured to indicate a duration for wireless charging supported by the first base station. For example, the time information is configured to indicate that the duration for wireless charging supported by the first base station is from 9:00 p.m. to 4:00 a.m. The duration may be represented by start time information and end time information, or represented by start time information and duration information. For example, the time information is that the start time is moment a, and the duration is b hours.

In an embodiment, in response to the first base station receiving a request message for obtaining the first capability information sent by the core network device, the first capability information for wireless charging is sent to the core network device.

In an embodiment, in response to a connection between the first base station and the core network device being established, the first capability information for wireless charging is sent to the core network device.

In an embodiment, in response to the first base station receiving the request message for obtaining the first capability information sent by the core network device, the first capability information for wireless charging and capacity information of a second base station connected to the first base station are sent to the core network device.

In an embodiment, in response to a connection between the first base station and the core network device being established, the first capability information for wireless charging and the capacity information of the second base station connected to the first base station are sent to the core network device.

In an embodiment, the first capability information may be sent to the core network device during a process of establishing an interface between the first base station and the core network device. It should be noted that, if a communication system is an NR system, the interface is an NG interface, and if the communication system is an E-UTRAN system, the interface is an S1 interface.

In an embodiment, the first capability information for wireless charging may be sent to the core network device periodically.

In an embodiment, in response to the first capability information being updated, first update information is sent to the core network device. In response to the communication system being an NR system, the first update information is sent to the core network device via an NG interface. Or, in response to the communication system being an E-UTRAN system, the first update information is sent to the core network device via an S1 interface.

In an embodiment, an NG interface application protocol signaling may be used to send the first update information to the core network device. The NG interface application protocol signaling is a RAN configuration update signaling.

In an embodiment, an S1 interface may be used to send the first update information to the core network device. The S1 interface application protocol signaling is an eNB configuration update signaling. In an embodiment, a preset field in the eNB configuration update signaling carries update information of capacity information for wireless charging of a second base station connected to the first base station.

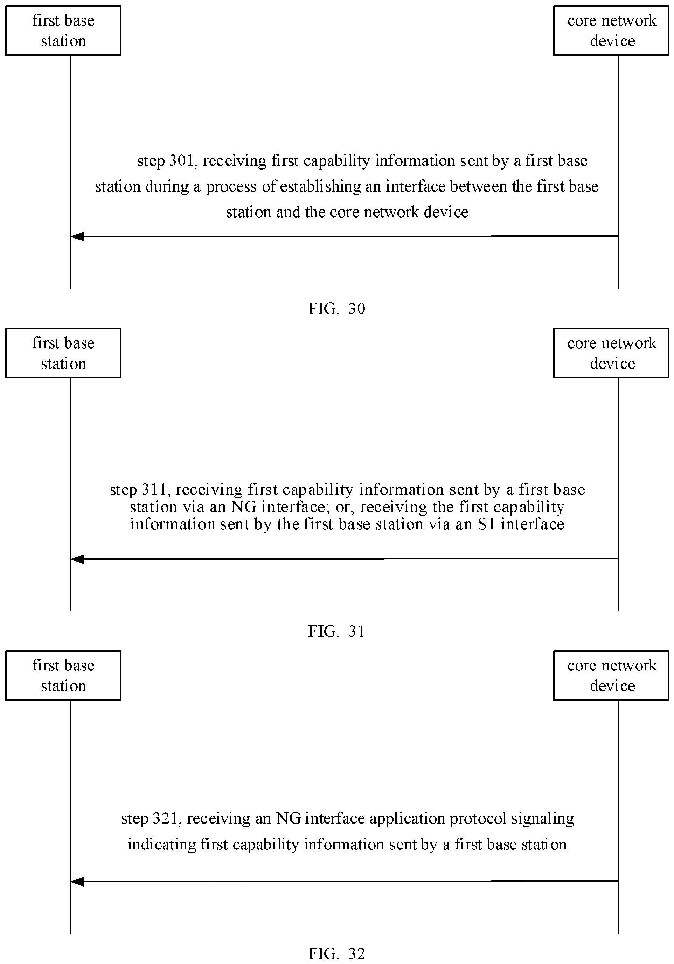

As illustrated in FIG. 30, the embodiment of the disclosure provides a method for transmitting capability information, which is executed by a core network device. The method includes the following steps.

At step 301, first capability information sent by a first base station is received during a process of establishing an interface between the first base station and the core network device.

In an embodiment, if a communication system is an NR system, the interface is an NG interface, and an NG interface application protocol signaling is used to send the first capability information to the core network device. The NG interface application protocol signaling may be an NG interface establishment request signaling.

In an embodiment, if the communication system is an E-UTRAN system, the interface is an S1 interface, and an S1 interface application protocol signaling is used to send the first capability information to the core network device. The S1 interface application protocol signaling may be an S1 interface establishment request signaling.

In an embodiment, the first base station may send capability information for wireless charging of a second base station connected to the first base station to the core network device.

In an embodiment, the first capability information includes one or more of the followings:
support information, configured to indicate whether a base station supports wireless charging or not;
power information, configured to indicate a power for wireless charging supported by the base station; and
time information, configured to indicate a duration for wireless charging supported by the base station.

It is noted that, those skilled in the art may understand that the method provided by the embodiment of the disclosure may be performed alone or together with some methods in the embodiments of the disclosure or some methods in the related art.

As illustrated in FIG. 31, the embodiment of the disclosure provides a method for transmitting capability information, which is executed by a core network device. The method includes the following steps.

At step 311, first capability information sent by a first base station is received via an NG interface;
or,
the first capability information sent by the first base station is received via an S1 interface.

In an embodiment, the communication system is the NR system. In response to the first base station receiving a request message for obtaining the first capability information sent by the core network device, the first capability information for wireless charging is sent to the core network device via the NG interface.

In an embodiment, the communication system is the E-UTRAN system. In response to the first base station receiving the request message for obtaining the first capability information sent by the core network device, the first capability information for wireless charging is sent to the core network device via the S1 interface.

In an embodiment, the communication system is the NR system. In response to a connection between the first base station and the core network device being established, the first capability information for wireless charging is sent to the core network device via the NG interface.

In an embodiment, the communication system is the E-UTRAN system. In response to the connection between the first base station and the core network device being established, the first capability information for wireless charging is sent to the core network device via the S1 interface.

In an embodiment, the communication system is the NR system. In response to the first base station receiving the request message for obtaining the first capability information sent by the core network device, the first capability information for wireless charging and capacity information of a second base station connected to the first base station are sent to the core network device via the NG interface.

In an embodiment, the communication system is the E-UTRAN system. In response to the first base station receiving the request message for obtaining the first capability information sent by the core network device, the first capability information for wireless charging and the capacity information of the second base station connected to the first base station are sent to the core network device via the S1 interface.

In an embodiment, the communication system is the NR system. In response to the connection between the first base station and the core network device being established, the first capability information for wireless charging and the capacity information of the second base station connected to the first base station are sent to the core network device via the NG interface.

In an embodiment, the communication system is the E-UTRAN system. In response to the connection between the first base station and the core network device being established, the first capability information for wireless charging and the capacity information of the second base station connected to the first base station are sent to the core network device via the S1 interface.

It is noted that, those skilled in the art may understand that the method provided by the embodiment of the disclosure may be performed alone or together with some methods in the embodiments of the disclosure or some methods in the related art.

As illustrated in FIG. 32, the embodiment of the disclosure provides a method for transmitting capability information, which is executed by a core network device. The method includes the following steps.

At step 321, an NG interface application protocol signaling indicating first capability information sent by a first base station is received.

In an embodiment, the NG interface application protocol signaling is an NG interface establishment request signaling, and a preset field in the NG interface establishment request signaling carries the first capability information.

In an embodiment, the first base station that initiates interface establishment may send the first capability information to an AMF through an NG SETUP REQUEST signaling. That is, the NG SETUP REQUEST signaling carries the first capability information.

In an embodiment, an IE may be added in the NG SETUP REQUEST signaling, and the newly added IE is used to carry the first capability information.

It is noted that, those skilled in the art may understand that the method provided by the embodiment of the disclosure may be performed alone or together with some methods in the embodiments of the disclosure or some methods in the related art.

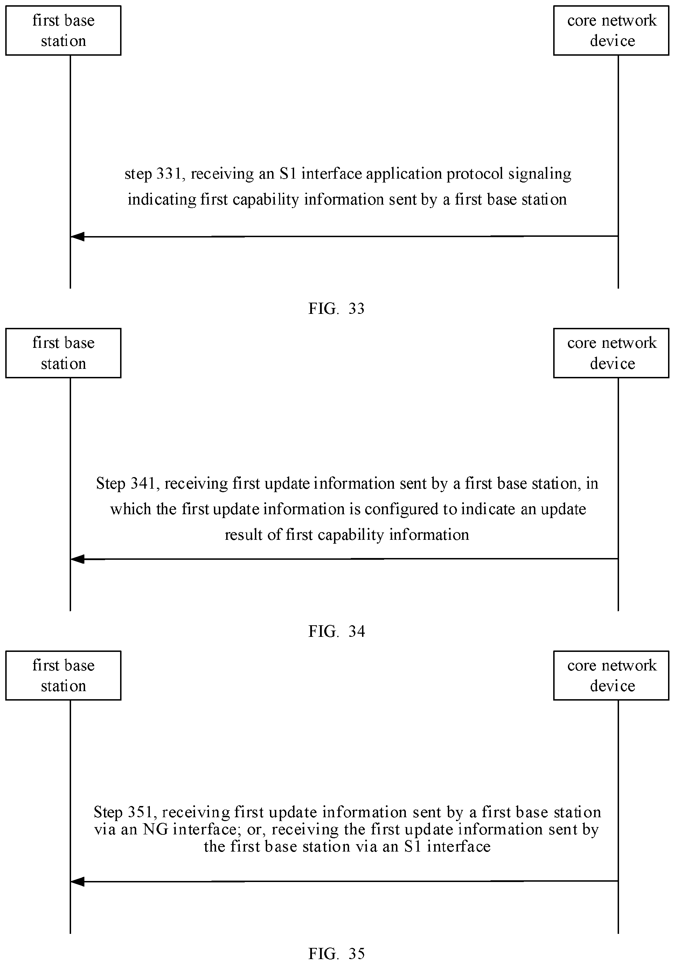

As illustrated in FIG. 33, the embodiment of the disclosure provides a method for transmitting capability information, which is executed by a core network device. The method includes the following steps.

At step 331, an interface application protocol signaling indicating first capability information sent by a first base station is received.

In an embodiment, the interface application protocol signaling is an S1 interface establishment request signaling, and a preset field in the S1 interface establishment request signaling carries the first capability information.

In an embodiment, the first base station that initiates interface establishment may send the first capability information and/or capacity information of a second base station connected to the first base station to an MME through an S1 SETUP REQUEST signaling.

In an embodiment, an IE may be added in the S1 SETUP REQUEST signaling, and the newly added IE is used to carry the first capability information.

In an embodiment, the preset field in the S1 interface establishment request signaling carries capacity information for wireless charging of the second base station connected to the first base station.

It is noted that, those skilled in the art may understand that the method provided by the embodiment of the disclosure may be performed alone or together with some methods in the embodiments of the disclosure or some methods in the related art.

As illustrated in FIG. 34, the embodiment of the disclosure provides a method for transmitting capability information, which is executed by a core network device. The method includes the following steps.

At step 341, first update information sent by a first base station is received.

The first update information is configured to indicate an update result of first capability information.

In an embodiment, updating the first capability information may include updating one or more of the followings:
support information, configured to indicate whether the base station supports wireless charging or not;
power information, configured to indicate a power for wireless charging supported by the base station; and
time information, configured to indicate a duration for wireless charging supported by the base station.

In an embodiment, in response to the first base station receiving a request message for obtaining the first update information sent by the core network device and the first capability information being updated, the first update information for wireless charging is sent to the core network device.

In an embodiment, in response to the first base station receiving the request message for obtaining the first update information sent by the core network device and the first capability information being updated, the first update information for wireless charging and update information of a second base station connected to the first base station are sent to the core network device.

In an embodiment, in response to a communication system being an NR system, the first update information is sent to the core network device via an NG interface; or, in response to the communication system being an E-UTRAN system, the first update information is sent to the core network device via an S1 interface.

In an embodiment, the first capability information may be sent to the core network device during a process of establishing an interface between the first base station and the core network device. It should be noted that if the communication system is an NR system, the interface is an NG interface, and if the communication system is an E-UTRAN system, the interface is an S1 interface.

In an embodiment, the first capability information for wireless charging may be sent to the core network device periodically.

In an embodiment, in response to the first capability information being updated, the first update information is sent to the core network device. In response to the communication system being an NR system, the first update information is sent to the core network device via an NG interface. Or, in response to the communication system being an E-UTRAN system, the first update information is sent to the core network device via an S1 interface.

In an embodiment, an NG interface application protocol signaling may be used to send the first update information to the core network device. The NG interface application protocol signaling is a RAN configuration update signaling.

In an embodiment, an S1 interface may be used to send the first update information to the core network device. The S1 interface application protocol signaling is an eNB configuration update signaling. In an embodiment, a preset field in the eNB configuration update signaling carries update information of capacity information for wireless charging of a second base station connected to the first base station.

It is noted that, those skilled in the art may understand that the method provided by the embodiment of the disclosure may be performed alone or together with some methods in the embodiments of the disclosure or some methods in the related art.

As illustrated in FIG. 35, the embodiment of the disclosure provides a method for transmitting capability information, which is executed by a core network device. The method includes the following steps.

At step 351, first update information sent by a first base station via an NG interface is received;
or,
the first update information sent by the first base station via an S1 interface is received.

In an embodiment, the communication system is the NR system. In response to the first base station receiving a request message for obtaining the first update information sent by the core network device, the first update information for wireless charging is sent to the core network device via the NG interface.

In an embodiment, the communication system is the E-UTRAN system. In response to the first base station receiving the request message for obtaining the first update information sent by the core network device, the first update information for wireless charging is sent to the core network device via the S1 interface.

In an embodiment, the communication system is the NR system. In response to the first base station receiving the request message for obtaining the first update information sent by the core network device, the first update information for wireless charging and update information of a second base station connected to the first base station are sent to the core network device via the NG interface.

In an embodiment, the communication system is the E-UTRAN system. In response to the first base station receiving the request message for obtaining the first update information sent by the core network device, the first update information for wireless charging and the update information of the second base station connected to the first base station are sent to the core network device via the S1 interface.

It is noted that, those skilled in the art may understand that the method provided by the embodiment of the disclosure may be performed alone or together with some methods in the embodiments of the disclosure or some methods in the related art.

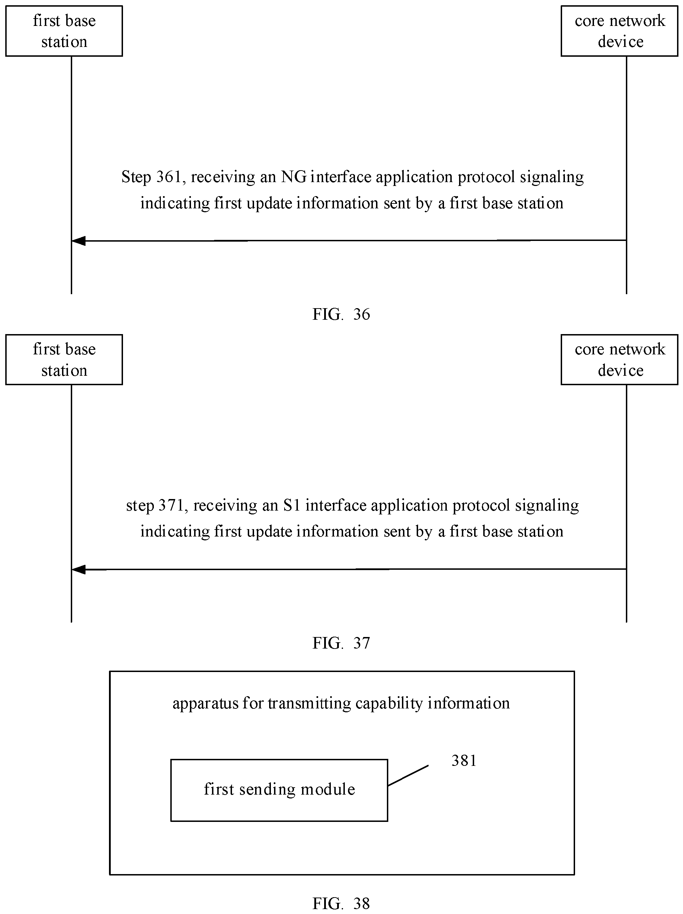

As illustrated in FIG. 36, the embodiment of the disclosure provides a method for transmitting capability information, which is executed by a core network device. The method includes the following steps.

At step 361, an NG interface application protocol signaling indicating first update information sent by a first base station is received.

In an embodiment, the NG interface application protocol signaling is a RAN configuration update signaling, and a preset field of the RAN configuration update signaling carries the first update information.

In an embodiment, when a wireless charging capability supported by the first base station changes, a RAN CONFIGURATION UPDATE signaling may be used to send the first update information. That is, a new IE may be added in the RAN CONFIGURATION UPDATE signaling to carry the first update information.

It is noted that, those skilled in the art may understand that the method provided by the embodiment of the disclosure may be performed alone or together with some methods in the embodiments of the disclosure or some methods in the related art.

As illustrated in FIG. 37, the embodiment of the disclosure provides a method for transmitting capability information, which is executed by a core network device. The method includes the following steps.

At step 371, an S1 interface application protocol signaling indicating first update information sent by a first base station is received.

In an embodiment, the S1 interface application protocol signaling is an eNB configuration update signaling, and a preset field of the eNB configuration update signaling carries the first update information.

In an embodiment, the preset field in the eNB configuration update signaling carries update information of capacity information for wireless charging of a second base station connected to the first base station.

In an embodiment, when a wireless charging capability supported by the first base station changes, an ENB CONFIGURATION UPDATE signaling may be used to send the first update information. That is, a new IE may be added in the ENB CONFIGURATION UPDATE signaling to carry the first update information.

In an embodiment, when a wireless charging capability supported by the second base station connected to the first base station changes, a new IE may be added in a Connected en-gNB To Be Added List or a Connected en-gNB To Be Removed List IE in the ENB CONFIGURATION UPDATE signaling to indicate the wireless charging capability supported by the second base station connected to the first base station.

It is noted that, those skilled in the art may understand that the method provided by the embodiment of the disclosure may be performed alone or together with some methods in the embodiments of the disclosure or some methods in the related art.

In an embodiment, the first capability information includes one or more of the followings:
support information, configured to indicate whether a base station supports wireless charging or not;
power information, configured to indicate a power for wireless charging supported by the base station; and
time information, configured to indicate a duration for wireless charging supported by the base station.

As illustrated in FIG. 38, the embodiment of the disclosure provides an apparatus for transmitting capability information, which is applied to a first base station. The apparatus includes:
a first sending module 381, configured to send first capability information for wireless charging to a core network device.

The first capability information is at least configured to indicate whether the first base station supports a wireless charging capability.

It is noted that, those skilled in the art may understand that the method provided by the embodiment of the disclosure may be performed alone or together with some methods in the embodiments of the disclosure or some methods in the related art.

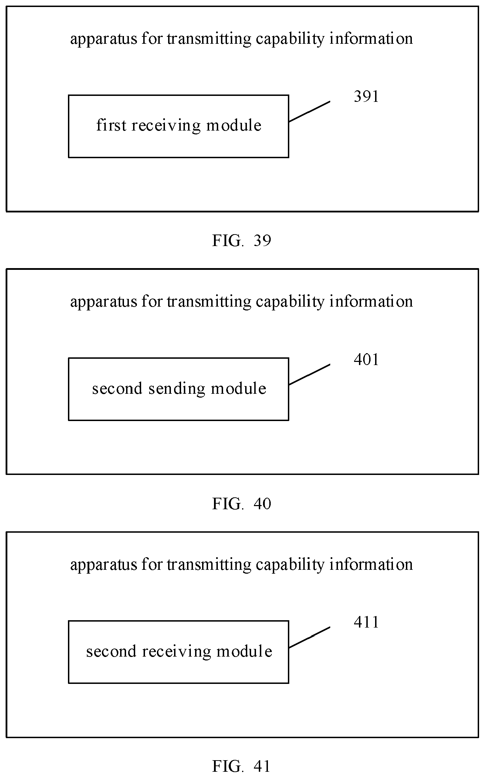

As illustrated in FIG. 39, the embodiment of the disclosure provides an apparatus for transmitting capability information, which is applied to a first base station. The apparatus includes:
a first receiving module 391, configured to receive second capability information for wireless charging sent by a core network device.

The second capability information is at least configured to indicate whether the core network device supports a wireless charging capability.

It is noted that, those skilled in the art may understand that the method provided by the embodiment of the disclosure may be performed alone or together with some methods in the embodiments of the disclosure or some methods in the related art.

As illustrated in FIG. 40, the embodiment of the disclosure provides an apparatus for transmitting capability information, which is applied to a core network device. The apparatus includes:
a second sending module 401, configured to send second capability information for wireless charging to a first base station.

The second capability information is at least configured to indicate whether the core network device supports a wireless charging capability.

It is noted that, those skilled in the art may understand that the method provided by the embodiment of the disclosure may be performed alone or together with some methods in the embodiments of the disclosure or some methods in the related art.

As illustrated in FIG. 41, the embodiment of the disclosure provides an apparatus for transmitting capability information, which is applied to a core network device. The apparatus includes:
a second receiving module 411, configured to receive first capability information for wireless charging sent by a first base station.

The first capability information is at least configured to indicate whether the first base station supports a wireless charging capability.

It is noted that, those skilled in the art may understand that the method provided by the embodiment of the disclosure may be performed alone or together with some methods in the embodiments of the disclosure or some methods in the related art.

The embodiment of the disclosure provides a communication device. The communication device includes:
a processor;
a memory for storing instructions executable by the processor.

The processor is configured to implement the method of any embodiment of the disclosure when running the executable instructions.

The processor may include various types of storage mediums. The storage mediums are non-transitory computer storage mediums that are capable of continuing to memorize information stored thereon after the communication device is powered down.

The processor may be connected to the memory via a bus or the like for reading an executable program stored on the memory.

The embodiment of the disclosure provides a computer storage medium. The computer storage medium stores a computer executable program. When the executable program is executed by a processor, the method of any embodiment of the disclosure is implemented.

With respect to the apparatus in the above embodiments, the specific manner in which each module performs an operation has been described in detail in the embodiments relating to the method, and will not be described in detail herein.

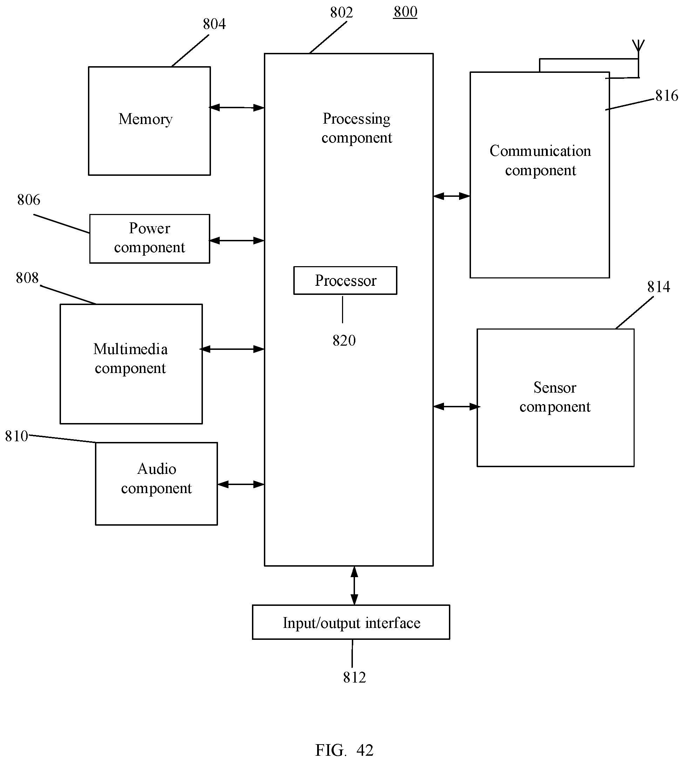

As illustrated in FIG. 42, the embodiment of the disclosure provides a structure of a terminal.

With reference to FIG. 42. the embodiment of the disclosure provides a structure of a terminal 800. The terminal may be a mobile phone, a computer, a digital broadcasting terminal, a message transceiver device, a game console, a tablet device, a medical device, a fitness device and a personal digital assistant.

As illustrated in FIG. 42, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone call, data communication, camera operation, and recording operation. The processing component 802 may include one or more processors 820 to perform instructions to implement all or part of the steps in the above described methods. Moreover, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and a user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of a user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the exemplary embodiments, there is also provided a non-transitory computer readable storage medium, such as the memory 804, including instructions executable by the processor 820 in the terminal 800, for implementing the above methods. For example, the non-transitory computer-readable storage medium may be a ROM, a Random Access Memory (RAM), a CD-ROM, a magnetic tape, a floppy disc, and an optical data storage device.

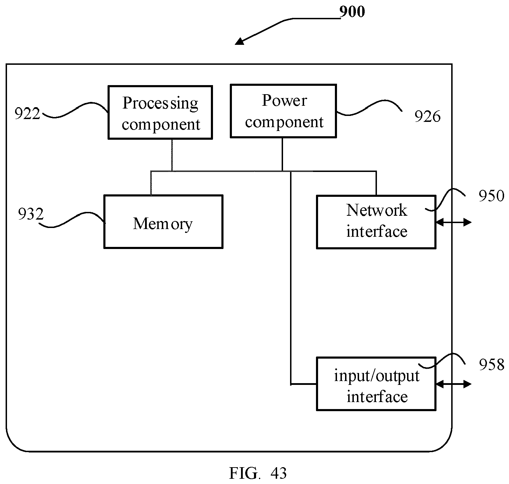

As illustrated in FIG. 43, the embodiment of the disclosure provides a structure of a base station. For example, the base station 900 may be provided as a network device. As illustrated in FIG. 43, the base station 900 includes a processing component 922 including one or more processors, and memory resources represented by a memory 932 for storing instructions that can be executed by the processing component 922, such as applications. The applications stored in the memory 932 may include one or more modules each corresponding to a set of instructions. In addition, the processing component 922 is configured to execute the instructions to perform the method applied to the base station as described above.

The base station 900 may also include a power component 926 configured to perform power management of the base station 900, a wired or wireless network interface 950 configured to connect the base station 900 to a network, and an I/O interface 958. The base station 900 may operate on an operating system stored in the memory 932, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, usages, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for transmitting capability information, executed by a first base station, comprising:
sending first capability information for wireless charging to a core network device;
wherein the first capability information is at least configured to indicate whether the first base station supports a wireless charging capability.

2. The method of claim 1, wherein sending the first capability information for wireless charging to the core network device comprises:
sending the first capability information to the core network device during a process of establishing an interface between the first base station and the core network device.

3. The method of claim 1, wherein sending the first capability information for wireless charging to the core network device comprises:
in response to a communication system being a new radio (NR) system, sending the first capability information to the core network device via a new generation (NG) interface;
or,
in response to the communication system being an evolved universal terrestrial radio access network (E-UTRAN) system, sending the first capability information to the core network device via an S1 interface.

4. The method of claim 3, wherein sending the first capability information to the core network device via the NG interface comprises:
sending an NG interface application protocol signaling indicating the first capability information to the core network device.

5. The method of claim 4, wherein the NG interface application protocol signaling is an NG interface establishment request signaling, and a preset field in the NG interface establishment request signaling carries the first capability information.

6. The method of claim 3, wherein sending the first capability information to the core network device via the S1 interface comprises:
sending an S1 interface application protocol signaling indicating the first capability information to the core network device.

7. The method of claim 6, wherein the S1 interface application protocol signaling is an S1 interface establishment request signaling, and a preset field in the S1 interface establishment request signaling carries the first capability information.

8. The method of claim 7, wherein the preset field in the S1 interface establishment request signaling carries capacity information for wireless charging of a second base station connected to the first base station.

9. The method of claim 1, further comprising:
in response to the first capability information being updated, sending first update information to the core network device;
wherein the first update information is configured to indicate an update result of the first capability information.

10. The method of claim 9, wherein sending the first update information to the core network device comprises:
in response to a communication system being an NR system, sending the first update information to the core network device via an NG interface;
or,
in response to the communication system being an E-UTRAN system, sending the first update information to the core network device via an S1 interface.

11. The method of claim 10, wherein sending the first update information to the core network device via the NG interface comprises:
sending an NG interface application protocol signaling indicating the first update information to the core network device.

12. The method of claim 11, wherein the NG interface application protocol signaling is a radio access network (RAN) configuration update signaling, and a preset field in the RAN configuration update signaling carries the first update information.

13. The method of claim 10, wherein sending the first update information to the core network device via the S1 interface comprises:
sending an S1 interface application protocol signaling indicating the first update information to the core network device.

14. The method of claim 13, wherein the S1 interface application protocol signaling is an evolved node B (eNB) configuration update signaling, and a preset field in the eNB configuration update signaling carries the first update information.

15. The method of claim 14, wherein the preset field in the eNB configuration update signaling carries update information of capacity information for wireless charging of a second base station connected to the first base station.

16. The method of any one of claims 1-15, wherein the first capability information comprises one or more of:
support information, configured to indicate whether a base station supports wireless charging or not;
power information, configured to indicate a power for wireless charging supported by the base station; and
time information, configured to indicate a duration for wireless charging supported by the base station.

17. A method for transmitting capability information, executed by a first base station, comprising:
receiving second capability information for wireless charging sent by a core network device;
wherein the second capability information is at least configured to indicate whether the core network device supports a wireless charging capability.

18. The method of claim 17, wherein receiving the second capability information for wireless charging sent by the core network device comprises:
receiving the second capability information for wireless charging sent by the core network device during a process of establishing an interface between the first base station and the core network device.

19. The method of claim 17, wherein receiving the second capability information for wireless charging sent by the core network device comprises:
receiving the second capability information for wireless charging sent by the core network device via a new generation (NG) interface;
or,
receiving the second capability information for wireless charging sent by the core network device via an S1 interface.

20. The method of claim 19, wherein receiving the second capability information for wireless charging sent by the core network device via the NG interface comprises:
receiving an NG interface application protocol signaling indicating the second capability information sent by the core network device.

21. The method of claim 20, wherein the NG interface application protocol signaling is an NG interface establishment response signaling, and a preset field in the NG interface establishment response signaling carries the second capability information.

22. The method of claim 19, wherein receiving the second capability information for wireless charging sent by the core network device via the S1 interface comprises:
receiving an S1 interface application protocol signaling indicating the second capability information sent by the first base station.

23. The method of claim 22, wherein the S1 interface application protocol signaling is an S1 interface establishment response signaling, and a preset field in the S1 interface establishment response signaling carries the second capability information.

24. The method of claim 17, further comprising:
receiving second update information sent by the core network device;
wherein the second update information is configured to indicate an update result of the second capability information.

25. The method of claim 24, wherein receiving the second update information sent by the core network device comprises:
receiving the second update information sent by the core network device via an NG interface;
or,
receiving the second update information sent by the core network device via an S1 interface.

26. The method of claim 25, wherein receiving the second update information sent by the core network device via the NG interface comprises:
receiving an NG interface application protocol signaling indicating the second update information sent by the core network device.

27. The method of claim 26, wherein the NG interface application protocol signaling is an access and mobility management function (AMF) configuration update signaling, and a preset field in the AMF configuration update signaling carries the second update information.

28. The method of claim 25, wherein receiving the second update information sent by the core network device via the S1 interface comprises:
receiving an S1 interface application protocol signaling indicating the second update information sent by the core network device.

29. The method of claim 28, wherein the S1 interface application protocol signaling is a mobility management entity (MME) configuration update signaling, and a preset field in the MME configuration update signaling carries the second update information.

30. The method of any one of claims 17-29, wherein the second capability information comprises one or more of:
support information, configured to indicate whether the core network device supports wireless charging or not;
power information, configured to indicate a power for wireless charging supported by the core network device; and
time information, configured to indicate a duration for wireless charging supported by the core network device.

31. A method for transmitting capability information, executed by a core network device, comprising:
sending second capability information for wireless charging to a first base station;
wherein the second capability information is at least configured to indicate whether the core network device supports a wireless charging capability.

32. The method of claim 31, wherein sending the second capability information for wireless charging to the first base station comprises:
sending the second capability information for wireless charging to the first base station during a process of establishing an interface between the first base station and the core network device.

33. The method of claim 31, wherein sending the second capability information for wireless charging to the first base station comprises:
in response to a communication system being a new radio (NR) system, sending the second capability information to the first base station via a new generation (NG) interface;
or,
in response to the communication system being an evolved universal terrestrial radio access network (E-UTRAN) system, sending the second capability information to the first base station via an S1 interface.

34. The method of claim 33, wherein sending the second capability information to the first base station via the NG interface comprises:
sending an NG interface application protocol signaling indicating the second capability information to the first base station.

35. The method of claim 34, wherein the NG interface application protocol signaling is an NG interface establishment response signaling, and a preset field in the NG interface establishment response signaling carries the second capability information.

36. The method of claim 33, wherein sending the second capability information to the first base station via the S1 interface comprises:
sending an S1 interface application protocol signaling indicating the second capability information to the first base station.

37. The method of claim 36, wherein the S1 interface application protocol signaling is an S1 interface establishment response signaling, and a preset field in the S1 interface establishment response signaling carries the second capability information.

38. The method of claim 31, further comprising:
in response to the second capability information being updated, sending second update information to the first base station;
wherein the second update information is configured to indicate an update result of the second capability information.

39. The method of claim 38, wherein sending the second update information to the first base station comprises:
in response to a communication system being an NR system, sending the second update information to the first base station via an NG interface;
or,
in response to the communication system being an E-UTRAN system, sending the second update information to the first base station via an S1 interface.

40. The method of claim 39, wherein sending the second update information to the first base station via the NG interface comprises:
sending an NG interface application protocol signaling indicating the second update information to the first base station.

41. The method of claim 40, wherein the NG interface application protocol signaling is an access and mobility management function (AMF) configuration update signaling, and a preset field in the AMF configuration update signaling carries the second update information.

42. The method of claim 39, wherein sending the second update information to the second base station via the S1 interface comprises:
sending an S1 interface application protocol signaling indicating the second update information to the first base station.

43. The method of claim 42, wherein the S1 interface application protocol signaling is a mobility management entity (MME) configuration update signaling, and a preset field in the MME configuration update signaling carries the second update information.

44. The method of any one of claims 31-43, wherein the second capability information comprises one or more of:
support information, configured to indicate whether the core network device supports wireless charging or not;
power information, configured to indicate a power for wireless charging supported by the core network device; and
time information, configured to indicate a duration for wireless charging supported by the core network device.

45. A method for transmitting capability information, executed by a core network device, comprising:
receiving first capability information for wireless charging sent by a first base station;
wherein the first capability information is at least configured to indicate whether the first base station supports a wireless charging capability.

46. The method of claim 45, wherein receiving the first capability information for wireless charging sent by the first base station comprises:
receiving the first capability information sent by the first base station during a process of establishing an interface between the first base station and the core network device.

47. The method of claim 45, wherein receiving the first capability information for wireless charging sent by the first base station comprises:
receiving the first capability information sent by the first base station via a new generation (NG) interface; or,
receiving the first capability information sent by the first base station via an S1 interface.

48. The method of claim 47, wherein receiving the first capability information sent by the first base station via the NG interface comprises:
receiving an NG interface application protocol signaling indicating the first capability information sent by the first base station.

49. The method of claim 48, wherein the NG interface application protocol signaling is an NG interface establishment request signaling, and a preset field in the NG interface establishment request signaling carries the first capability information.

50. The method of claim 47, wherein receiving the first capability information sent by the first base station via the S1 interface comprises:
receiving an S1 interface application protocol signaling indicating the first capability information sent by the first base station.

51. The method of claim 50, wherein the S1 interface application protocol signaling is an S1 interface establishment request signaling, and a preset field in the S1 interface establishment request signaling carries the first capability information.

52. The method of claim 51, wherein the preset field in the S1 interface establishment request signaling carries capacity information for wireless charging of a second base station connected to the first base station.

53. The method of claim 45, further comprising:
receiving first update information sent by the first base station;
wherein the first update information is configured to indicate an update result of the first capability information.

54. The method of claim 53, wherein receiving the first update information sent by the first base station comprises:
receiving the first update information sent by the first base station via an NG interface;
or,
receiving the first update information sent by the first base station via an S1 interface.

55. The method of claim 54, wherein receiving the first update information sent by the first base station via the NG interface comprises:
receiving an NG interface application protocol signaling indicating the first update information sent by the first base station.

56. The method of claim 55, wherein the NG interface application protocol signaling is a radio access network (RAN) configuration update signaling, and a preset field in the RAN configuration update signaling carries the first update information.

57. The method of claim 54, wherein receiving the first update information sent by the first base station via the S1 interface comprises:
receiving an S1 interface application protocol signaling indicating the first update information sent by the first base station.

58. The method of claim 57, wherein the S1 interface application protocol signaling is an evolved node B (eNB) configuration update signaling, and a preset field in the eNB configuration update signaling carries the first update information.

59. The method of claim 58, wherein the preset field in the eNB configuration update signaling carries update information of capacity information for wireless charging of a second base station connected to the first base station.

60. The method of any one of claims 1-59, wherein the first capability information comprises one or more of:
support information, configured to indicate whether a base station supports wireless charging or not;
power information, configured to indicate a power for wireless charging supported by the base station; and
time information, configured to indicate a duration for wireless charging supported by the base station.

61. An apparatus for transmitting capability information, applied to a first base station, comprising:
a first sending module, configured to send first capability information for wireless charging to a core network device;
wherein the first capability information is at least configured to indicate whether the first base station supports a wireless charging capability.

62. An apparatus for transmitting capability information, applied to a first base station, comprising:
a first receiving module, configured to receive second capability information for wireless charging sent by a core network device;
wherein the second capability information is at least configured to indicate whether the core network device supports a wireless charging capability.

63. An apparatus for transmitting capability information, applied to a core network device, comprising:
a second sending module, configured to send second capability information for wireless charging to a first base station;
wherein the second capability information is at least configured to indicate whether the core network device supports a wireless charging capability.

64. An apparatus for transmitting capability information, applied to a core network device, comprising:
a second receiving module, configured to receive first capability information for wireless charging sent by a first base station;
wherein the first capability information is at least configured to indicate whether the first base station supports a wireless charging capability.

65. A communication device, comprising:
an antenna;
a memory; and
a processor, connected to the antenna and the memory, respectively, wherein the processor is configured to control transmitting and receiving of the antenna by executing computer-executable instructions stored on the memory and is capable of implementing the method of any one of claims 1-16, claims 17-30, claims 31-44, or claims 45-60.

66. A computer storage medium having computer-executable instructions stored thereon that, wherein when the computer-executable instructions are executed by a processor, the method of any one of claims 1-16, claims 17-30, claims 31-44, or claims 45-60 is implemented.
